# EUROPEAN PATENT APPLICATION

(11) **EP 4 782 514 A1**
(43) Date of publication of application: **29.07.2026**
(21) Application number: 24868294.0
(22) Date of filing: 18.09.2024
(51) Int. Cl.: C09K 3/00, C01G 31/02, C01G 33/00, C01G 35/00, C01G 41/00

(54) **INFRARED-ABSORBING PARTICLES, INFRARED-ABSORBING PARTICLE DISPERSION LIQUID, INFRARED-ABSORBING TRANSPARENT SUBSTRATE, INFRARED-ABSORBING PARTICLE DISPERSION, AND INFRARED-ABSORBING LAMINATED TRANSPARENT SUBSTRATE**

(30) Priority: 20.09.2023 JP 2023153868
(71) Applicant: SUMITOMO METAL MINING CO., LTD., Tokyo 105-8716 (JP)
(72) Inventor: MACHIDA, Keisuke, Ichikawa-shi, Chiba 272-8588 (JP); WAKABAYASHI, Masao, Ichikawa-shi, Chiba 272-8588 (JP)
(74) Representative: Hirons, Daniel Stuart
(86) International application number: PCT/JP2024/033365
(87) International publication number: WO 2025/063217

(57) **Abstract**

Infrared-absorbing particles including complex tungsten oxide particles and Group 5 element complex oxide particles.

## Description

### TECHNICAL FIELD

The present invention relates to infrared-absorbing particles, an infrared-absorbing particle dispersion liquid, an infrared-absorbing transparent substrate, an infrared-absorbing particle dispersion, and an infrared-absorbing laminated transparent substrate.

### BACKGROUND ART

Various techniques have been proposed as heat ray shielding techniques for reducing solar radiation transmittance while maintaining transparency with good visible light transmittance. Among them, heat ray shielding techniques using a dispersion of fine conductive particles have advantages over other techniques, such as an excellent heat ray shielding property, low cost, radio wave transmittance, high weatherability, and the like.

For example, Patent Document 1 proposes an infrared absorptive synthetic resin molded article that is formed by molding a transparent synthetic resin containing SnO₂ fine powder in a dispersed state into a sheet or film, and laminating the resulting sheet or film on a transparent or semitransparent synthetic resin substrate to form a single product.

Patent Document 2 proposes a laminated glass including an intermediate film layer between at least two transparent glass plates, and the intermediate film layer includes functional ultrafine particles having a particle size of 0.2 µm or less in a dispersed state. Also, the described functional ultrafine particles are, for example: single materials of metals, oxides, nitrides, sulfides, and Sb or F-doped materials of Sn, Ti, Si, Zn, Zr, Fe, Al, Cr, Co, Ce, In, Ni, Ag, Cu, Pt, Mn, Ta, W, V, and Mo; complex materials containing at least two or more selected from these; mixtures containing organic resins in the single materials or the complex materials; or coated materials in which organic resins or mixtures containing organic resins coat the single materials or the complex materials.

In Patent Document 3, the applicant discloses a selective transmission film coating liquid and a selective transmission film, in which at least one of ruthenium oxide fine particles, titanium nitride fine particles, tantalum nitride fine particles, titanium silicide fine particles, molybdenum silicide fine particles, lanthanum boride fine particles, iron oxide fine particles, or iron(III) oxyhydroxide fine particles is dispersed.

However, any heat ray shielding structure disclosed in Patent Documents 1 to 3, such as the infrared absorptive synthetic resin molded articles and the like, has a problem that heat ray shielding performance is insufficient when a high visible light transmittance is required.

For example, in an example of specifically evaluating the heat ray shielding performance of the heat ray shielding structure disclosed in Patent Documents 1 to 3, when the visible light transmittance is about 70%, the solar radiation transmittance exceeds 50%.

The visible light transmittance and the solar radiation transmittance are visible light transmittance and solar radiation transmittance calculated in accordance with JIS R 3106 (2019), and are also referred to simply as visible light transmittance and solar radiation transmittance in the present specification.

In Patent Document 4, the applicant discloses an infrared shielding material fine particle dispersion in which infrared shielding material fine particles are dispersed in a medium. The infrared shielding material fine particles include tungsten oxide fine particles and/or complex tungsten oxide fine particles. The particle diameter of the infrared shielding material fine particles is 1 nm or more and 800 nm or less. The applicant also discloses that the complex tungsten oxide particles are fine particles of complex tungsten oxide represented by a general formula MₓW_{y}O_{z} (where M is one or more elements selected from H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten, O is oxygen, 0.001≤x/y≤1, and 2.2≤z/y≤3.0), and that the complex tungsten oxide fine particles contain one or more of fine particles having a hexagonal crystal structure, fine particles having a tetragonal crystal structure, and fine particles having a cubic crystal structure.

As disclosed in Patent Document 4, a heat ray shielding dispersion using the complex tungsten oxide fine particles represented by the general formula MₓW_{y}O_{z} exhibits high heat ray shielding performance, and the solar radiation transmittance is reduced to below 50% when the visible light transmittance is about 70%. In particular, the heat ray shielding fine particle dispersion using the complex tungsten oxide fine particles having the hexagonal crystal structure and containing at least one selected from specific elements, such as Cs, Rb, Tl, and the like as the element M exhibits remarkable heat ray shielding performance, and the solar radiation transmittance is reduced to below 37% when the visible light transmittance is about 70%.

### RELATED ART DOCUMENTS

### PATENT DOCUMENTS

Patent Document 1: Japanese Unexamined Patent Application Publication No. H2-136230
Patent Document 2: Japanese Unexamined Patent Application Publication No. H8-259279
Patent Document 3: Japanese Unexamined Patent Application Publication No. H11-181336
Patent Document 4: International Publication No. WO2005/037932

### SUMMARY OF THE INVENTION

### PROBLEMS TO BE SOLVED BY THE INVENTION

However, a new problem was found after the complex tungsten oxide fine particles and the infrared shielding material fine particle dispersion using the complex tungsten oxide fine particles came into wider use in the market. This problem is that, when the complex tungsten oxide fine particles are applied to a structure, such as a window material or the like, the transmittance with respect to near-infrared light in a wavelength range of 700 nm or more and 1,000 nm or less among light passing through the window material or the like is greatly reduced.

Since near-infrared light in this wavelength range is substantially invisible to the human eyes and can be oscillated by a light source, such as an inexpensive near-infrared LED or the like, they are widely used for communication, imaging devices, sensors, and the like using near-infrared light. However, the structure, such as the window material or the like, using the complex tungsten oxide fine particles strongly absorbs near-infrared light in this wavelength range along with heat rays.

As a result, use of communication, imaging devices, sensors, and the like using near-infrared light through the structure, such as the window material or the like, using the complex tungsten oxide fine particles is forced to be given up.

For example, when a heat ray shielding film using the complex tungsten oxide fine particles described in Patent Document 4 is attached to a window, near-infrared light-based communication between an indoor infrared oscillator and an intrusion detector including an outdoor infrared receiver is disturbed. Thus, the intrusion detector sometimes does not operate normally.

Further, for example, an automatic wiper of an automobile has a function of automatically operating a wiper when it begins to rain, and is controlled using a raindrop detection sensor (rain sensor). In general, the rain sensor is installed near the windshield to detect raindrops using a combination of an infrared LED and an Si photodiode. That is, when there are no raindrops on the windshield, the infrared light emitted from the LED is reflected by the windshield surface to be incident on the Si photodiode. Conversely, when there are raindrops, the amount of the infrared light incident on the Si photodiode is reduced because the infrared light transmits through the raindrops. Based on this principle, the presence or absence of raindrops (moisture) is identified. However, when the complex tungsten oxide fine particles described in Patent Document 4 are applied to impart a heat ray shielding function to the windshield, a raindrop detection sensor and an automatic wiping function of the automobile sometimes do not operate normally because the complex tungsten oxide fine particles absorb the infrared light emitted from the infrared LED.

Furthermore, the complex tungsten oxide fine particles described in Patent Document 4 have a blue color tone because the complex tungsten oxide fine particles tend to relatively strongly absorb long-wavelength light among light of various wavelengths included in visible light. As a result, the heat ray shielding dispersion or the like using the complex tungsten oxide fine particles inevitably has a blue color tone. As a result, the heat ray shielding dispersion sometimes has a problem of not meeting the needs of users who require a color tone other than blue.

Structures using complex tungsten oxide fine particles or the like, such as a heat ray shielding film, a window material, or the like, have a high ability to cut heat rays, and such structures are widely used in fields in the market in which shielding of heat rays is desired. However, it is difficult to use these structures, such as the heat ray shielding film, the window material, and the like, for wireless communication, an imaging device, a sensor, or the like using near-infrared light. In addition, the structures, such as the heat ray shielding film, the window material, and the like, using the complex tungsten oxide fine particles or the like, have restriction in selection of a color tone.

In view of the above, it is an object in one aspect of the present invention to provide infrared-absorbing particles having a heat ray shielding property, a high transmittance with respect to near-infrared light having a wavelength of 700 nm or more and 1,000 nm or less, and a suppressed blue color tone.

### MEANS FOR SOLVING THE PROBLEMS

In one aspect of the present invention, infrared-absorbing particles including complex tungsten oxide particles and Group 5 element complex oxide particles are provided.

### ADVANTAGEOUS EFFECTS OF THE INVENTION

According to one aspect of the present invention, it is possible to provide infrared-absorbing particles having a heat ray shielding property, a high transmittance with respect to near-infrared light having a wavelength of 700 nm or more and 1,000 nm or less, and a suppressed blue color tone.

### BRIEF DESCRIPTION OF THE DRAWINGS

[FIG. 1] FIG. 1 is an explanatory diagram of a hexagonal crystal structure of a complex tungsten oxide.
[FIG. 2] FIG. 2 is a schematic diagram of an infrared-absorbing particle dispersion liquid.
[FIG. 3] FIG. 3 is a schematic diagram of an infrared-absorbing transparent substrate.
[FIG. 4] FIG. 4 is a schematic diagram of an infrared-absorbing particle dispersion.
[FIG. 5] FIG. 5 is a schematic diagram of an infrared-absorbing laminated transparent substrate.

### DETAILED DESCRIPTION OF THE INVENTION

Hereinafter, embodiments of the present invention will be described with reference to the drawings. The present invention is not limited to the embodiments described below, and various modifications and substitutions may be made to the following embodiments without departing from the scope of the present invention. [Infrared-absorbing particles and infrared-absorbing particle dispersion liquid] An infrared-absorbing particle dispersion liquid (hereinafter also referred to as a "dispersion liquid") according to an embodiment of the present disclosure (hereinafter referred to as "the present embodiment") includes a liquid medium, and infrared-absorbing particles disposed in the liquid medium.

The infrared-absorbing particles included in the infrared-absorbing particle dispersion liquid of the present embodiment include, at least, both complex tungsten oxide particles and Group 5 element complex oxide particles. The infrared-absorbing particles may consist of the complex tungsten oxide particles and the Group 5 element complex oxide particles.

The inventors of the present invention have conducted various studies for obtaining an infrared-absorbing particle dispersion liquid that includes infrared-absorbing particles containing a complex tungsten oxide, and has a heat ray shielding property, a high transmittance with respect to near-infrared light having a wavelength of 700 nm or more and 1,000 nm or less, and a suppressed blue color tone.

For example, just for increasing the transmittance with respect to near-infrared light in the wavelength range of 700 nm or more and 1,000 nm or less, it may be sufficient to reduce the concentration of the complex tungsten oxide particles in the dispersion liquid.

However, when the concentration of the complex tungsten oxide particles in the dispersion liquid is reduced, a heat ray absorbing ability, whose minimum value is the transmittance of light in the wavelength range of 1,200 nm or more and 1,800 nm or less in a transmittance curve, also decreases, resulting in decreasing the heat ray shielding effect.

Separately, the inventors of the present invention have invented Group 5 element complex oxide particles having a predetermined composition as new infrared-absorbing particles. The invented infrared-absorbing particles have high transparency with respect to light in the visible light region, a heat ray shielding effect, and optical characteristics and a color tone different from those of conventional materials, such as a complex tungsten oxide and the like. Especially, unlike in the complex tungsten oxide, it is confirmed that the invented infrared-absorbing particles have high transmittance with respect to near-infrared light in the wavelength range of 700 nm or more and 1,000 nm or less. Therefore, it is possible to apply these infrared-absorbing particles to a structure, such as a window material or the like, for a communication device, an imaging device, a sensor, and the like using near-infrared light in the wavelength range of 700 nm or more and 1,000 nm or less. However, when the absorption ability of visible light is the same, the near-infrared-absorbing ability is lower than that of conventional complex tungsten oxide particles.

The inventors of the present invention progressed the studies, and arrived at a completely new idea of producing an infrared-absorbing dispersion liquid by using the complex tungsten oxide particles and the Group 5 element complex oxide particles in combination rather than separately using the complex tungsten oxide particles and the Group 5 element complex oxide particles. The infrared-absorbing particle dispersion liquid including the complex tungsten oxide particles and the Group 5 element complex oxide particles in combination has a remarkable advantage over conventional techniques, i.e., it achieves both the heat ray shielding effect and the transmittance with respect to near-infrared light in the wavelength range of 700 nm or more and 1,000 nm or less at very high levels.

Surprisingly, the infrared-absorbing particle dispersion liquid including the complex tungsten oxide particles and the Group 5 element complex oxide particles in combination exhibited a suppressed blue color tone compared to the infrared-absorbing particle dispersion liquid including the complex tungsten oxide particles alone.

Also, the same effect was found to be exhibited by the infrared-absorbing particle dispersion or the like using the infrared-absorbing particle dispersion liquid. That is, the infrared-absorbing particle dispersion or the like produced using the infrared-absorbing particles of the present embodiment was found to increase the heat ray shielding effect and the transmittance with respect to near-infrared light in the wavelength range of 700 nm or more and 1,000 nm or less, and to suppress a blue color tone. Therefore, the infrared-absorbing particle dispersion liquid, the infrared-absorbing particle dispersion, or the like of the present embodiment can realize optical characteristics having high industrial usefulness.

Therefore, the infrared-absorbing particles of the present embodiment can have a heat ray shielding property, increase the transmittance with respect to near-infrared light in the wavelength range of 700 nm or more and 1,000 nm or less, and suppress a blue color tone.

For example, compared to the complex tungsten oxide particles alone when the visible light transmittance is the same, the infrared-absorbing particles of the present embodiment can have a comparable heat ray shielding property, increase the transmittance with respect to near-infrared light in the wavelength range of 700 nm or more and 1,000 nm or less, and suppress a blue color tone.

Since the optical characteristics and the like of the infrared-absorbing particles of the present embodiment can be evaluated as the infrared-absorbing particle dispersion liquid, the infrared-absorbing particle dispersion, or the like, the above characteristics can be exhibited when the infrared-absorbing particles are used as the infrared-absorbing particle dispersion liquid, the infrared-absorbing particle dispersion, or the like.

In the following, [a] Complex tungsten oxide particles, [b] Group 5 element complex oxide particles, and a production method of the Group 5 element complex oxide particles, [c] Infrared-absorbing particle dispersion liquid, [d] Infrared-absorbing transparent substrate, and a production method of the infrared-absorbing transparent substrate, [e] Infrared-absorbing particle dispersion, and a production method of the infrared-absorbing particle dispersion, and [f] Infrared-absorbing laminated transparent substrate will be described in this order.

### [a] Complex tungsten oxide particles

### (Composition)

The complex tungsten oxide particles for use are preferably particles including a complex tungsten oxide represented by a general formula MₓWO_{3-y}. The complex tungsten oxide particles may consist of the complex tungsten oxide represented by the above general formula, but complex tungsten oxide particles including unavoidable impurities are not excluded.

In the above general formula, M is element M, W is tungsten, and O is oxygen.

The element M is preferably one or more elements selected from K (potassium), Rb (rubidium), Cs (cesium), and Tl (thallium).

In the above general formula, x and y are preferably 0.15≤x≤0.33 and 0<y≤0.46.

The complex tungsten oxide particles have an infrared-absorbing property. Therefore, infrared-absorbing particles including the complex tungsten oxide particles can suppress transmission of light in the infrared light region, especially in the near-infrared light region, thereby exhibiting infrared-absorbing ability. Also, since the extinction coefficient of light in the visible light region is very small compared to the extinction coefficient of light in the infrared light region, even if the transmission of light in the infrared light region is sufficiently suppressed, it is possible to maintain high transmittance with respect to light in the visible light region.

The complex tungsten oxide is represented by the general formula MₓWO_{3-y} as described above, and has a composition in which the element M is added to tungsten oxide (WO_{3-y}).

According to the studies conducted by the inventors of the present invention, tungsten oxide (WO_{3-y}) has an infrared-absorbing property. In the case of tungsten oxide, there are no effective free electrons in tungsten trioxide (WO₃), and thus absorption and reflection characteristics in the infrared light region are low. However, by setting y, indicating a deficient amount of oxygen relative to tungsten in tungsten oxide (WO_{3-y}), to be greater than 0, free electrons are generated in the tungsten oxide to form efficient infrared-absorbing particles. However, there is a possibility that a crystal phase of WO₂ causes absorption or scattering of light in the visible light region, resulting in decreasing the absorption of light in the infrared light region. Therefore, in the case of tungsten oxide particles, when y in the general formula represented by WO_{3-y} satisfies 0<y≤0.46, formation of a crystal phase of WO₂ is suppressed, and thus efficient infrared-absorbing particles can be obtained.

In the case of the complex tungsten oxide particles used for infrared-absorbing particles, by adding the element M to the tungsten oxide, free electrons are generated in the complex tungsten oxide, and higher absorption characteristics attributed to the free electrons are developed in the infrared light region. Therefore, the complex tungsten oxide particles exhibit especially high characteristics as an infrared-absorbing material, which absorbs infrared rays.

The complex tungsten oxide can be formed into a more efficient infrared-absorbing material by combining control of the deficient amount of oxygen described for the tungsten oxide and addition of the element M generating free electrons. When the control of the deficient amount of oxygen and the addition of the element M generating free electrons are combined, it is preferable to satisfy the relationships of 0.15≤x≤0.33 and 0<y≤0.46 in the general formula MₓWO_{3-y}, which represents the complex tungsten oxide.

The value x indicating the amount of the element M in the general formula of the complex tungsten oxide will be described. The value x being 0.15 or more is preferable because free electrons are generated in a sufficient amount, and a desired near-infrared-absorbing effect can be obtained. The value x being 0.33 or less is preferable because generation of an impurity phase in the complex tungsten oxide particles can be avoided.

Next, the value y indicating the deficient amount of oxygen will be described. In the complex tungsten oxide represented by the general formula MₓWO_{3-y}, the same mechanism as in the case of the value y in the tungsten oxide (WO_{3-y}) described above works. Therefore, y preferably satisfies 0<y≤0.46.

No particular limitation is imposed on the crystal structure of the complex tungsten oxide included in the complex tungsten oxide particles, and the complex tungsten oxide particles can include the complex tungsten oxide having a desired crystal structure. However, the complex tungsten oxide included in the complex tungsten oxide particles preferably has a hexagonal crystal structure because the transmittance of light in the visible light region and the absorption of light in the infrared light region of the complex tungsten oxide particles are especially increased.

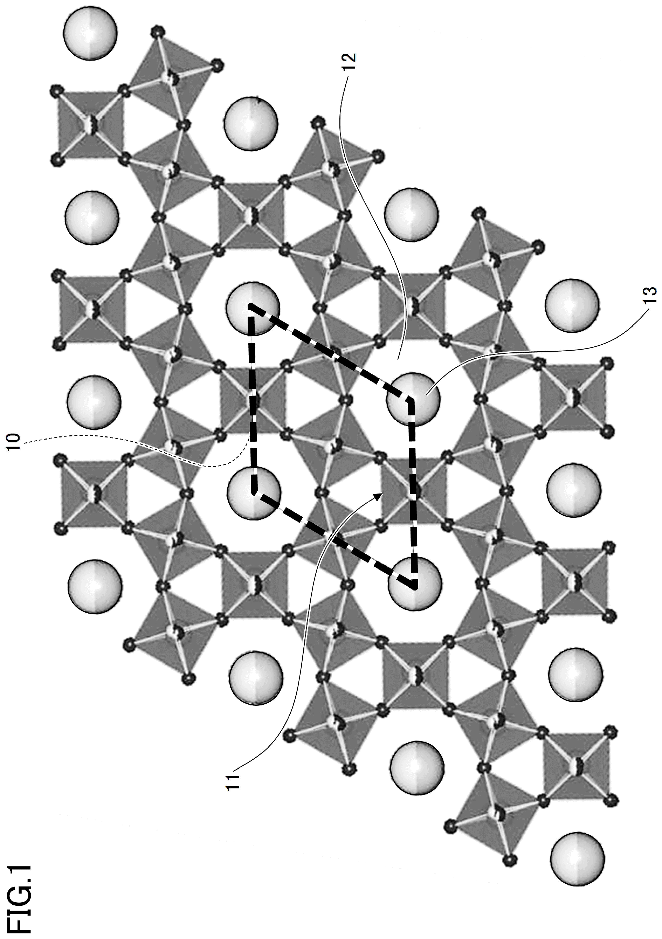

A schematic plan diagram of the hexagonal crystal structure is illustrated in FIG. 1. FIG. 1 is a diagram of the crystal structure of the complex tungsten oxide having a hexagonal crystal structure when viewed from the (001) direction, in which a unit cell 10 is indicated by a dotted line.

In FIG. 1, six octahedrons 11 formed by WO₆ units are assembled to form a void (tunnel) 12 having a hexagonal cross-sectional shape. A single unit (unit structure) is formed by the six octahedrons 11 and an element M 13 disposed in the void 12. Assembling a large number of the single units forms a hexagonal crystal structure.

In this manner, when the complex tungsten oxide particles contain the complex tungsten oxide having the above-described unit structure, it is possible to especially improve the transmittance of light in the visible light region and the absorption of light in the infrared light region. The entirety of the complex tungsten oxide particles does not necessarily need to be formed by the crystalline complex tungsten oxide particles having the structure illustrated in FIG. 1. For example, even if the complex tungsten oxide particles locally have this structure, it is possible to obtain the effect of improving the transmittance of light in the visible light region and the absorption of light in the infrared light region. Therefore, the complex tungsten oxide particles may be crystalline or amorphous as a whole.

Addition of element M having a large ionic radius as the element M of the complex tungsten oxide tends to form the above-described hexagonal crystal structure. Specifically, for example, addition of one or more selected from K, Rb, Cs, and Tl as the element M tends to form the above-described hexagonal crystal structure. Therefore, the element M preferably contains one or more selected from K, Rb, Cs, and Tl, and the element M more preferably is one or more selected from K, Rb, Cs, and Tl.

When the element M contains one or more selected from Cs and Rb, the complex tungsten oxide especially tends to form the hexagonal crystal. Therefore, the complex tungsten oxide further preferably contains one or more selected from Cs and Rb as the element M. Also, the element M of the complex tungsten oxide may be one or more selected from Cs and Rb. When the element M contains Cs, the weatherability of the complex tungsten oxide is enhanced, and thus the element M particularly preferably contains Cs.

For the hexagonal crystal to be formed, any other element can be used, as long as the element M exists in the hexagonal void formed by the WO₆ unit. Thus, addition of the above-described elements as the element M is not limiting.

Also, the complex tungsten oxide contained in the complex tungsten oxide particles can have a tungsten bronze structure having a tetragonal or cubic crystal structure, in addition to the hexagonal crystal structure. The complex tungsten oxide having such a structure is effective as the infrared-absorbing material. That is, the complex tungsten oxide contained in the complex tungsten oxide particles contained in the infrared-absorbing particles is not limited to the complex tungsten oxide having a hexagonal crystal structure. It is suitable to use complex tungsten having a tetragonal or cubic crystal structure.

The absorption position (absorption wavelength) of light in the infrared light region of the complex tungsten oxide tends to change in accordance with the crystal structure of the complex tungsten oxide. For example, the absorption position in the infrared light region tends to shift toward a wavelength longer in the case of the complex tungsten oxide having the tetragonal crystal structure than in the case of the complex tungsten oxide having the cubic crystal structure. Further, the absorption position in the infrared light region tends to shift toward a longer wavelength in the case of the complex tungsten oxide having the hexagonal crystal structure than in the case of the complex tungsten oxide having the tetragonal crystal structure. In addition, in accordance with the change in the absorption position of light depending on the type of the crystal structure, the absorption of light in the visible light region of the complex tungsten oxide is the smallest in the hexagonal crystal, and the second smallest in the tetragonal crystal. The absorption of light in the visible light region of the complex tungsten oxide is the greatest in the cubic crystal. That is, the complex tungsten oxide of the hexagonal crystal exhibits a high contrast between the transmittance of light in the visible light region and the transmittance of light in the infrared light region.

Therefore, when it is required to have a high transmittance of light in the visible light region and a high absorbance of light in the infrared light region, it is preferable to use the tungsten bronze having the hexagonal crystal structure. However, the tendency of the optical characteristics described here is a rough tendency, and changes depending on the type and amount of the element M, and the amount of oxygen. Therefore, the complex tungsten oxide contained in the complex tungsten oxide particles contained in the infrared-absorbing particles is not limited to the material having the hexagonal crystal structure.

The crystal structure of the complex tungsten oxide contained in the complex tungsten oxide particles is not limiting as described above. For example, complex tungsten oxides having different crystal structures may be contained simultaneously.

However, as described above, the complex tungsten oxide having the hexagonal crystal structure can increase the transmittance of light in the visible light region and the absorption of light in the infrared light region. Therefore, the complex tungsten oxide particles preferably include the complex tungsten oxide having the hexagonal crystal system, and the complex tungsten oxide particles may be formed by the complex tungsten oxide having the hexagonal crystal system.

### (Particle characteristics of complex tungsten oxide particles)

No particular limitation is imposed on the average particle size of the complex tungsten oxide particles, and the average particle size of the complex tungsten oxide particles can be desirably selected, for example, in accordance with the characteristics required for the infrared-absorbing particle dispersion liquid. For example, the average particle size of the complex tungsten oxide particles is preferably 100 nm or less when the infrared-absorbing particle dispersion liquid is used for an application that requires especially high transparency with respect to light in the visible light region. This is because the complex tungsten oxide particles having the average particle size of 100 nm or less can suppress shielding of light due to scattering of light, and efficiently retain transparency while retaining high visibility in the visible light region.

In the present specification, the average particle size means a volume average particle size. That is, the average particle size in the present specification is an average particle size weighted by the particle volume, and is obtained by dividing the sum of the diameters of individual particles, multiplied by the volume of the particles, by the total volume of the particles in a set of particles. The volume average particle size (MV) can be measured, for example, by using a particle size distribution analyzer based on a dynamic light scattering method.

When the infrared-absorbing particle dispersion or the like using the infrared-absorbing particle dispersion liquid of the present embodiment is used for an application in which transparency in the visible light region is especially important, such as an automobile roof, a side window, or the like, it is preferable to further consider reducing scattering due to the complex tungsten oxide particles. Considering further reduction in scattering, the average particle size of the complex tungsten oxide particles is more preferably 40 nm or less, further preferably 30 nm or less, and particularly preferably 25 nm or less.

This is because the complex tungsten oxide particles having the smaller average particle size reduce scattering of light in the visible light region due to geometric scattering or Mie scattering. By reducing scattering of light in the visible light region, it is possible to increase transparency even in the case of being irradiated with high-intensity light. Therefore, in the case of being irradiated with high-intensity light, it is possible to reliably avoid loss of clear transparency, for example, due to the infrared-absorbing particle dispersion or the like showing an outer appearance like frosted glass.

When the average particle size of the complex tungsten oxide particles is 40 nm or less, the geometric scattering or Mie scattering is reduced to a Rayleigh scattering region. In the Rayleigh scattering region, the scattered light is proportional to the power of 6 of the particle size, thereby reducing scattering, i.e. increasing transparency, as the average particle size decreases. Further, the average particle size of the complex tungsten oxide particles is preferably 30 nm or less and particularly preferably 25 nm or less because the scattered light is very small.

As described above, from the viewpoint of avoiding scattering of light, the average particle size of the complex tungsten oxide particles is preferably smaller. However, when the average particle size of the complex tungsten oxide particles is too small, handling in producing the infrared-absorbing particle dispersion liquid may be difficult, or aggregation in the infrared-absorbing particle dispersion liquid may occur. Therefore, the average particle size of the complex tungsten oxide particles is preferably 0.1 nm or more.

Therefore, the average particle size of the complex tungsten oxide particles is preferably 0.1 nm or more and 100 nm or less, more preferably 0.1 nm or more and 40 nm or less, further preferably 0.1 nm or more and 30 nm or less, and particularly preferably 0.1 nm or more and 25 nm or less.

No particular limitation is imposed on the production method of the complex tungsten oxide particles, and the complex tungsten oxide particles can be produced by various publicly known methods.

### [b] Group 5 element complex oxide particles, and a production method of the Group 5 element complex oxide particles

### [b-1] Group 5 element complex oxide particles

The inventors of the present invention conducted studies on new infrared-absorbing particles. The new infrared-absorbing particles are more preferably infrared-absorbing particles that absorb light in the near-infrared light region of the infrared light region.

In conducting studies on the new infrared-absorbing particles, the inventors of the present invention focused on oxides of Group 5 elements. Since no effective free electrons or holes exist in typical oxides of Group 5 elements (V₂O₅, Nb₂O₅, and Ta₂O₅), absorption and reflection characteristics in the infrared light region are low, and thus these are not effective as the infrared-absorbing material. However, in complex oxides containing positive elements in addition to the Group 5 elements (Group 5 element complex oxides), free electrons or holes are generated in the complex oxides, and thus absorption characteristics attributed to free electrons or holes are developed in the infrared light region. Therefore, the new infrared-absorbing particles were found to successfully work.

Further, the inventors of the present invention have found that, within a specific portion of a compositional range of the complex oxide, there is a range that is particularly effective as infrared-absorbing particles. Specifically, they have found that, when the compositional range of the complex oxide is set to be within a predetermined range, the complex oxide is transparent in the visible light region and absorbs light in the infrared light region.

### (Composition)

The Group 5 element complex oxide particles can contain a complex oxide containing, at least, a Group 5 element, a positive element, and oxygen.

The complex oxide contained in the Group 5 element complex oxide particles can contain the following elements A1, A2, and B.

The element A1 is one or more elements selected from H (hydrogen) and alkali metal elements.

The element A2 is one or more elements selected from Mg (magnesium) and alkaline earth metal elements.

The element B is one or more elements selected from V (vanadium), Nb (niobium), and Ta (tantalum).

Relationships of 0.002≤(x1+x2)/y≤1.5, 0.001≤x1/y≤1, and 0.001≤x2/y≤1 are preferably satisfied, where x1 denotes an amount by mole of the element A1 contained in the complex oxide, x2 denotes an amount by mole of the element A2 contained in the complex oxide, and y denotes an amount by mole of the element B contained in the complex oxide.

The Group 5 element complex oxide particles may consist of the complex oxide described above. However, in this case, Group 5 element complex oxide particles containing unavoidable impurities mixed in the production process or the like are not excluded.

As described above, by adding the element A1 and the element A2, i.e., positive elements, to an oxide containing the element B, the resulting complex oxide can exhibit an infrared-absorbing property.

Further, by simultaneously adding the element A1 and the element A2 to the oxide containing the element B to have a composition within a predetermined range, the Group 5 element complex oxide particles containing the complex oxide can have a light absorption peak in a wavelength range of 1,500 nm or more and 2,100 nm or less. This is likely because, when the compositions of the element A1 and the element A2 are within predetermined ranges, free electrons or holes having a density particularly suitable for exhibiting a light absorption peak in a wavelength range of 1,500 nm or more and 2,100 nm or less are generated.

The element A1 is preferably one or more elements selected from H and alkali metal elements as described above. In the present specification, the alkali metal element means Li (lithium), Na (sodium), K (potassium), Rb (rubidium), Cs (cesium), or Fr (francium).

From the viewpoint of improving the stability of the complex oxide, the element A1 is preferably one or more elements selected from H, Li, Na, K, Rb, and Cs, and more preferably one or more elements selected from Na and K.

The element A2 is preferably one or more elements selected from Mg and alkaline earth metal elements as described above. In the present specification, the alkaline earth metal element means Ca (calcium), Sr (strontium), Ba (barium), or Ra (radium).

From the viewpoint of improving the stability of the complex oxide, the element A2 is preferably one or more elements selected from alkaline earth metal elements, and more preferably one or more elements selected from Ca, Sr, and Ba.

The element B may be one or more elements selected from V, Nb, and Ta, preferably one or more elements selected from Nb and Ta, and more preferably Nb.

When the value (x1+x2)/y, indicating a ratio of the total amount of the element A1 and the element A2 to the element B in the complex oxide, is 0.002 or more, free electrons or holes are generated in a sufficient amount in the complex oxide, thereby obtaining the desired infrared-absorbing effect. As the amounts of the element A1 and the element A2 increase, the amount of free electrons to be supplied increases, thereby increasing the infrared-absorbing efficiency. This effect is saturated when the value (x1+x2)/y is about 1.5. When the value (x1+x2)/y is 1.5 or less, it is possible to avoid formation of an impurity phase in the infrared-absorbing particles. Therefore, as described above, the (x1+x2)/y including x1, x2, and y preferably satisfies a relationship of 0.002≤(x1+x2)/y≤1.5, more preferably satisfies a relationship of 0.5≤(x1+x2)/y≤1.0, and further preferably satisfies a relationship of 0.7≤(x1+x2)/y≤1.0.

A ratio of the amount by mole of the element A1 or the element A2 to the amount by mole of the element B preferably satisfies a relationship of 0.001≤x1/y≤1 or 0.001≤x2/y≤1, and more preferably satisfies a relationship of 0.1≤x1/y≤1 or 0.1≤x2/y≤1. When the values x1/y and x2/y are 0.001 or more, free electrons or holes are generated in a sufficient amount in the complex oxide, thereby obtaining the desired infrared-absorbing effect. When the values x1/y and x2/y are 1 or less, it is possible to further stabilize the cubic perovskite structure of the complex oxide described below.

When z denotes an amount by mole of oxygen contained in the complex oxide, the complex oxide can be represented, for example, by a general formula A1ₓ₁A2ₓ₂B_{y}O_{z}. In this general formula, "A1" represents the element A1, "A2" represents the element A2, "B" represents the element B, and "O" represents oxygen. As shown in the general formula, the complex oxide preferably contains, for example, the element A1, the element A2, the element B, and oxygen.

By adding the element A1 and the element A2 to the oxide containing the element B, free electrons or holes are supplied to the complex oxide, thereby exhibiting an infrared-absorbing property. Thus, no particular limitation is imposed on the amount of oxygen contained in the complex oxide. However, when the amount of oxygen is set within a predetermined range, the amount of free electrons or holes in the complex oxide can be set within a particularly suitable range from the viewpoint of enhancing infrared absorption characteristics. Therefore, z/y, indicating a ratio of the amount by mole of oxygen to the amount by mole of the element B in the complex oxide, is preferably 1.0<z/y<3.5, more preferably 2.0<z/y<3.5, further preferably 2.0<z/y≤3.0, and most preferably 2.4≤z/y≤3.0.

As described above, z/y indicates the ratio of the amount by mole of oxygen to the amount by mole of the element B in the complex oxide, and is a value that influences the deficient amount of oxygen or the excess amount of oxygen in the complex oxide. As described above, the amount of free electrons or holes in the complex oxide can be controlled by the amount of oxygen. Therefore, the z/y value is preferably controlled in accordance with the required infrared-absorbing property and the like. The z/y value can be readily controlled in accordance with synthesis conditions or the like for the Group 5 element complex oxide particles.

The values of x1, x2, y, and z in the general formula A1ₓ₁A2ₓ₂B_{y}O_{z} preferably satisfy a relationship of 0<(x1+2x2+5y-2z)/y≤3, more preferably satisfy a relationship of 0<(x1+2x2+5y-2z)/y≤2, and further preferably satisfy a relationship of 0.1≤(x1+2x2+5y-2z)/y≤1. Here, (x1+2x2+5y-2z)/y indicates the excess or deficient amount of electrons per the element B. When this satisfies the above range, it is possible to obtain a particularly high near-infrared-absorbing effect.

### (Crystal structure and lattice constant of complex oxide)

According to the studies conducted by the inventors of the present invention, when the complex oxide has a crystal structure selected from a cubic crystal structure, a tetragonal crystal structure, and an orthorhombic crystal structure, the transmission of light in the visible light region is especially increased, and the absorption of light in the infrared light region is increased. However, for obtaining the effect of increasing the transmission of light in the visible light region and increasing the absorption of light in the infrared light region, it is sufficient for the complex oxide to contain a unit structure of the cubic, tetragonal, or orthorhombic crystal structure. Thus, the complex oxide may partially contain an amorphous structure or another structure.

In the complex oxide, when (x1+x2)/y, indicating the ratio of the total amount by mole of the elements A1 and A2 to the amount by mole of the element B, is 1.0, and z/y, indicating the ratio of the amount by mole of oxygen to the amount by mole of the element B, is 3.0, the crystal structure of the complex oxide is a cubic perovskite structure. Specifically, for example, Na_{0.5}Sr_{0.5}NbO₃, K_{0.5}Ba_{0.5}NbO₃, or the like is a cubic perovskite structure.

The complex oxide satisfying (x1+x2)/y=1.0 and z/y=3.0 is assumed to be a basic structure. A complex oxide having an (x1+x2)/y value of less than 1.0 may have a cubic perovskite structure having defects in one or more elements selected from the elements A1 and A2. Also, a complex oxide having a z/y value of less than 3.0 may have a cubic perovskite structure having oxygen defects. Further, depending on the deficient state of each element, the complex oxide may have a crystal structure of a tetragonal, orthorhombic, or monoclinic crystal structure in which (A1,A2)BO₃ blocks and BO blocks are regularly stacked. In addition, a complex oxide having a z/y value of more than 3.0 and less than 3.5 may have a crystal structure of a cubic, tetragonal, or orthorhombic crystal structure.

As the infrared-absorbing particles, a material having high absorption of light in the infrared light region and low absorption of light in the visible light region is often required. However, since the required performance is different in accordance with the intended application or the like, it cannot be determined what crystal structure is preferable among the above-described crystal structures.

For example, in a case where the complex oxide is Naₓ₁Srₓ₂NbO_{z} (2.0<z≤3.0), for example, when the (x1+x2) value is 0.8 or more and less than 1.0, the complex oxide may have a cubic perovskite structure having defects of Na and Sr elements, and, in some cases, defects of oxygen. Also, when the complex oxide is Naₓ₁Srₓ₂NbO_{z} (2.0<z≤3.0), the complex oxide may have a crystal structure of a tetragonal or orthorhombic crystal structure in which (Na,Sr)NbO₃ blocks and NbO blocks are regularly stacked. The complex oxide having the above composition and crystal structure tends to have a high heat shielding property, which is important for a window material or the like. Here, the heat shielding property means a property determined based on a balance between visible light transparency and near-infrared absorption.

As described above, the composition of the complex oxide changes the relationship between the crystal structure and the near-infrared-absorbing property. Thus, no particular limitation is imposed on the crystal structure of the complex oxide contained in the Group 5 element complex oxide particles, and the crystal structure may be selected in accordance with the composition of the complex oxide, the required near-infrared-absorbing property, and the like.

No particular limitation is imposed on the lattice constant of the complex oxide, and the lattice constant of an a-axis with the cubic perovskite structure being used as a reference is preferably 3.96 Å or more and 4.14 Å or less, more preferably 3.97 Å or more and 4.14 Å or less, and further preferably 3.98 Å or more and 4.13 Å or less. The lattice constant can be calculated through Rietveld analysis.

When the crystal structure is not a cubic crystal structure (i.e., the crystal structure is an orthorhombic crystal structure or the like), the lattice constant of the a-axis with the cubic perovskite structure being used as a reference (hereinafter may be referred to as a "pseudocubic lattice constant") can be converted from the value of the lattice constant in the crystal structure. Specifically, the composition of a unit cell of the crystal structure that is not a cubic crystal structure is specified. Then, the volume of the unit cell is calculated based on the lattice constant. Next, the volume of the unit cell per one atom of the element B is calculated. Taking a cubic root of the calculated volume of the unit cell per one atom of the element B enables conversion into the pseudocubic lattice constant.

### (Particle characteristics of Group 5 element complex oxide particles)

No particular limitation is imposed on the particle characteristics, such as, for example, the average particle size of the Group 5 element complex oxide particles, and the particle characteristics may be desirably selected in accordance with the required infrared-absorbing property or the like.

The Group 5 element complex oxide particles preferably have an average particle size of 100 nm or less.

In general, it is known that a material containing free electrons or holes exhibits a reflection absorption response to infrared rays around a region of solar radiation having a wavelength of 200 nm or more and 2,600 nm or less due to plasma vibration. It is also known that, when powder particles of such a material are formed into particles smaller than the wavelength of light, geometric scattering in the visible light region is reduced, and transparency in the visible light region is obtained.

In the present specification, the term "transparency" is used to mean that "with respect to light in the visible light region, scattering is low and transmittance is high".

When the Group 5 element complex oxide particles are used for an application that requires especially high transparency with respect to light in the visible light region, the average particle size of the Group 5 element complex oxide particles is preferably 100 nm or less. This is because particles having an average particle size of 100 nm or less do not completely shield light due to scattering, and can retain visibility in the visible light region and efficiently retain transparency. In particular, when transparency in the visible light region is important, it is preferable to further consider scattering due to the particles.

When a further reduction in light scattering due to the Group 5 element complex oxide particles is required, the average particle size of the Group 5 element complex oxide particles is more preferably 40 nm or less, further preferably 30 nm or less, and particularly preferably 25 nm or less. When the average particle size of the Group 5 element complex oxide particles is small, scattering of light in the visible light region due to geometric scattering or Mie scattering is reduced. Therefore, by setting the average particle size of the Group 5 element complex oxide particles to be in the above range, when the Group 5 element complex oxide particles are applied to an infrared-absorbing particle dispersion or the like, it is possible to obtain clear transparency. When the average particle size is 40 nm or less, the geometric scattering or Mie scattering is reduced to a Rayleigh scattering region. In the Rayleigh scattering region, the scattered light is proportional to the sixth power of the particle size, thereby reducing scattering, i.e. increasing transparency, as the average particle size decreases.

Further, the average particle size is preferably 30 nm or less because the scattered light is very small. From the viewpoint of avoiding the scattering of light, the average particle size is preferably smaller. Although no particular limitation is imposed on the lower limit of the average particle size, the average particle size is preferably 0.1 nm or more. This is because production on an industrial scale is readily performed when the average particle size is 0.1 nm or more.

As described above, the average particle size of the Group 5 element complex oxide particles is preferably 0.1 nm or more and 100 nm or less, more preferably 0.1 nm or more and 40 nm or less, further preferably 0.1 nm or more and 30 nm or less, and particularly preferably 0.1 nm or more and 25 nm or less.

Both the complex tungsten oxide particles and the Group 5 element complex oxide particles, and the infrared-absorbing particles containing both the complex tungsten oxide particles and the Group 5 element complex oxide particles, preferably have particle size characteristics that are the same as those of the complex tungsten oxide particles or the Group 5 element complex oxide particles.

Therefore, the average particle size of the infrared-absorbing particles, and both the complex tungsten oxide particles and the Group 5 element complex oxide particles, is preferably 0.1 nm or more and 100 nm or less, more preferably 0.1 nm or more and 40 nm or less, further preferably 0.1 nm or more and 30 nm or less, and particularly preferably 0.1 nm or more and 25 nm or less. That is, the average particle size of one or more selected from the complex tungsten oxide particles and the Group 5 element complex oxide particles may be in the above suitable range.
[b-2] Production method of Group 5 element complex oxide particles Next, a production method of the Group 5 element complex oxide particles will be described. Since the production method of the Group 5 element complex oxide particles described below can produce the Group 5 element complex oxide particles, some of the already described matters will be omitted.

The Group 5 element complex oxide particles can be produced by a solid-phase reaction method. When synthesizing the Group 5 element complex oxide particles by the solid-phase reaction method, for example, an element A1 compound or an element A1 simple substance, an element A2 compound or an element A2 simple substance, and an element B compound or an element B simple substance can be used as raw materials.

The production method of the Group 5 element complex oxide particles may include a powder mixture preparation step (first powder mixture preparation step) of preparing a powder mixture of the element A1 compound or the element A1 simple substance, the element A2 compound or the element A2 simple substance, and the element B compound or the element B simple substance.

An element A1 source containing the element A1 can be the element A1 compound or the element A1 simple substance. The element A1 compound serving as the raw material is preferably one or more selected from oxides, hydroxides, carbonates, nitrates, sulfates, oxalates, organic compounds, sulfides, and chlorides of the element A1.

An element A2 source containing the element A2 can be the element A2 compound or the element A2 simple substance. The element A2 compound serving as the raw material is preferably one or more selected from oxides, hydroxides, carbonates, nitrates, sulfates, oxalates, organic compounds, sulfides, and chlorides of the element A2.

Since the suitable elements A1 and A2 have already been described, descriptions thereof are omitted here.

The element B compound or the element B simple substance, serving as an element B source containing the element B, is preferably one or more selected from pentoxides (V₂O₅, Nb₂O₅, and Ta₂O₅), dioxides (VO₂, NbO₂, and TaO₂), iron(III) oxides (V₂O₃ and Nb₂O₃), simple metal substances (V, Nb, and Ta), sulfates, ammonium salts, organic compounds, sulfides, chlorides of the element B, and hydrates of oxides obtained by dissolving chlorides of the element B in a liquid, such as alcohol or the like, hydrolyzing the resulting product by addition of water, and evaporating the solvent. Since the suitable elements B have already been described, descriptions thereof are omitted here.

In the powder mixture preparation step, no particular limitation is imposed on the specific procedure for obtaining a powder mixture of the element A1 compound or the element A1 simple substance, the element A2 compound or the element A2 simple substance, and the element B compound or the element B simple substance. An exemplary method is obtaining a powder mixture by dry mixing the element A1 compound or the like, the element A2 compound or the like, and the element B compound or the like in a powder state. Another possible method is obtaining a powder mixture by dissolving the element A1 compound or the like in water, and wet mixing the resulting solution with, for example, the element A2 compound or the like and the element B compound or the like, followed by drying.

In the powder mixture preparation step, it is preferable to perform mixing such that the ratio of the amounts by mole of the element A1, the element A2, and the element B in the obtained powder mixture is a ratio of the element A1, the element A2, and the element B in the intended complex oxide. That is, it is preferable to perform mixing to satisfy (A1+A2):B=(x1+x2):y, i.e., the ratio of the total amount by mole of the element A1 and the element A2 to the amount by mole of the element B (B) in the intended complex oxide. As described above, (x1+x2)/y including x1, x2, and y is preferably 0.002≤(x1+x2)/y≤1.5, more preferably 0.5≤(x1+x2)/y≤1.0, and further preferably 0.7≤(x1+x2)/y≤1.0. Therefore, it is preferable to mix the element A1 compound or the like, the element A2 compound or the like, and the element B compound or the like to satisfy the above suitable range. In the powder mixture preparation step, the raw materials may be mixed such that x1/y and x2/y, i.e., the ratios of the amounts by mole of the element A1 and the element A2 to the amount by mole of the element B in the obtained powder mixture, are the same as the corresponding ratios of the amounts by mole in the intended complex oxide. Specifically, the raw materials may be mixed, for example, such that x1/y and x2/y satisfy the suitable ranges described in "[b-1] Group 5 element complex oxide particles".

The Group 5 element complex oxide particles may be synthesized in multiple steps for obtaining the Group 5 element complex oxide particles containing a complex oxide having the intended composition. In this case, in the first powder mixture preparation step, the element A1 compound or the like, the element A2 compound or the like, and the element B compound or the like may be mixed to have a composition of an intermediate product.

The production method of the Group 5 element complex oxide particles may include a firing step (first firing step) of firing the powder mixture obtained in the powder mixture preparation step (first powder mixture preparation step).

No particular limitation is imposed on the conditions for the firing step. In the firing step, for example, the powder mixture may be fired in any atmosphere selected from an inert gas atmosphere, a reducing gas atmosphere, a vacuum atmosphere, a gas mixture atmosphere of an inert gas and a reducing gas, or an oxidizing atmosphere containing oxygen.

For example, when oxygen deficiency is introduced into the complex oxide to reduce z/y in the above general formula compared to the corresponding stoichiometric ratio, the firing atmosphere is preferably a gas mixture atmosphere of an inert gas and a reducing gas. No particular limitation is imposed on the reducing gas, and the reducing gas is preferably a hydrogen gas or the like. When a hydrogen gas is used as the reducing gas, the percentage by volume of the hydrogen gas is preferably 1% or more, and more preferably 3% or more. No particular limitation is imposed on the upper limit of the percentage by volume of the hydrogen gas. Since the reducing gas can be used alone, the upper limit can be up to 100%.

No particular limitation is imposed on the inert gas, and the inert gas may be one or more selected from a nitrogen gas, a noble gas, and the like.

The oxidizing atmosphere may be any atmosphere containing oxygen, and may be, for example, an atmosphere containing oxygen by 18% or more and 100% or less in terms of a percentage by volume. For example, the oxidizing atmosphere can be an atmospheric atmosphere.

No particular limitation is imposed on the conditions for the firing temperature in the firing step, and the firing temperature is preferably equal to or higher than the temperature at which the produced complex oxide begins to crystallize, and equal to or lower than the melting point of the complex oxide. Specifically, for example, it is preferable to set the firing temperature to be 1,000°C or higher and 2,100°C or lower.

The Group 5 element complex oxide particles may be synthesized in multiple steps for obtaining the Group 5 element complex oxide particles containing a complex oxide having the intended composition. In the case of performing the synthesis in multiple steps, the element B compound or the element B simple substance can be added to and mixed with the intermediate product obtained in the firing step (first firing step) (second powder mixture preparation step). It is also possible to prepare a plurality of types of intermediate products having different compositions, and mix the prepared intermediate products in the second powder mixture preparation step. At this time, the element B compound or the element B simple substance can be added to and mixed with the intermediate products, if necessary. When preparing a plurality of types of intermediate products having different compositions, the above powder mixture preparation step and the above firing step (first firing step) can be performed for each of the intermediate products.

No particular limitation is imposed on the element B compound or the like used in the second powder mixture preparation step, and the element B compound or the like may be, for example, the above compounds used in the first powder mixture preparation step. In the second powder mixture preparation step, it is preferable to perform mixing such that the ratio of the total amount by mole of the element A1 and the element A2 to the amount by mole of the element B in the obtained powder mixture is a ratio of the total amount by mole of the element A1 and the element A2 to the amount by mole of the element B in the intended complex oxide. That is, it is preferable to perform mixing to satisfy (A1+A2):B=(x1+x2):y, i.e., the ratio of the total amount by mole of the element A1 and the element A2 (A1+A2) to the amount by mole of the element B (B) in the intended complex oxide.

Also, in the second powder mixture preparation step, the raw materials may be mixed such that x1/y and x2/y, i.e., the ratios of the amounts by mole of the element A1 and the element A2 to the amount by mole of the element B contained in the obtained powder mixture, are the same as the corresponding ratios of the amounts by mole in the intended complex oxide. Specifically, the raw materials may be mixed, for example, such that x1/y and x2/y satisfy the suitable ranges described in "[b-1] Group 5 element complex oxide particles".

The mixing can be performed in the same manner as in the powder mixture preparation step, and thus descriptions thereof are omitted here.

Then, the obtained powder mixture can be subjected to a firing step (second firing step) to prepare the Group 5 element complex oxide particles. No particular limitation is imposed on the conditions for the second firing step, and the firing atmosphere and the firing temperature can be, for example, the same as those in the already described firing step (first firing step), and thus descriptions thereof are omitted here. The firing conditions for the first firing step may be the same as or different from the firing conditions for the second firing step.

The Group 5 element complex oxide particles can be obtained by performing the above-described steps. After completion of the firing step, the obtained Group 5 element complex oxide particles can be subjected to crushing, pulverizing, sieving, or the like, if necessary, thereby achieving a desired particle size distribution. The production method of the Group 5 element complex oxide particles described here is a configuration example. The Group 5 element complex oxide particles according to the embodiment of the present disclosure are not limited to those produced by the production method described above, and may be produced by any other production method.

### [c] Infrared-absorbing particle dispersion liquid

Next, a configuration example of the infrared-absorbing particle dispersion liquid of the present embodiment will be described.

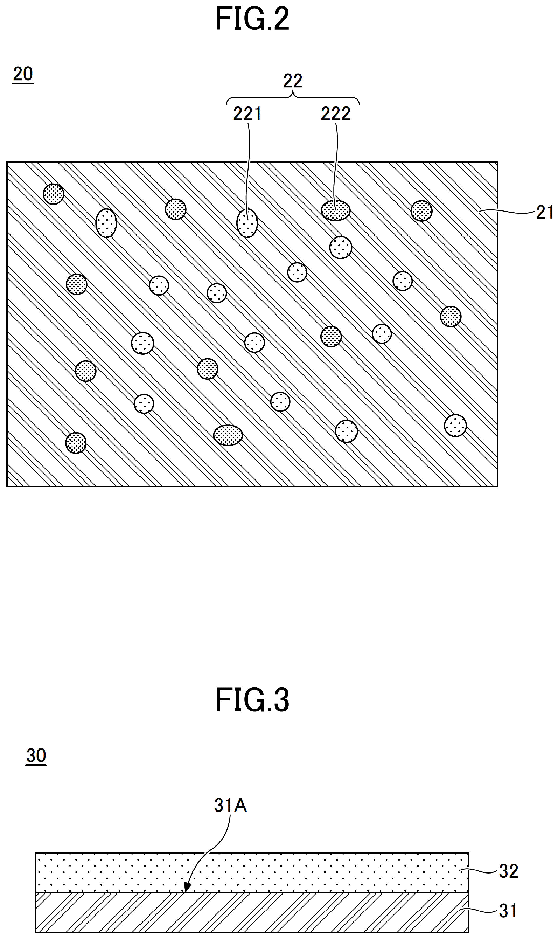

For example, as illustrated in FIG. 2, an infrared-absorbing particle dispersion liquid 20 of the present embodiment may include a liquid medium 21 and infrared-absorbing particles 22 disposed in the liquid medium 21. The infrared-absorbing particles 22 may include, at least, complex tungsten oxide particles 221 and Group 5 element complex oxide particles 222. The infrared-absorbing particles 22 are preferably dispersed in the liquid medium 21.

FIG. 2 is a schematic diagram, and the infrared-absorbing particle dispersion liquid of the present embodiment is not limited to the illustrated form. For example, in FIG. 2, the infrared-absorbing particles 22 are represented as circles, i.e., as spherical particles. However, the shape of the infrared-absorbing particles 22 is not limited to this shape, and can be any shape. The infrared-absorbing particle dispersion liquid 20 may contain additives, if necessary, in addition to the liquid medium 21 and the infrared-absorbing particles 22.

The infrared-absorbing particle dispersion liquid may contain a dispersant and other additives, if necessary, in addition to the infrared-absorbing particles and the liquid medium. The infrared-absorbing particle dispersion liquid of the present embodiment can be used as a coating liquid or an intermediate product of the infrared-absorbing particle dispersion.

The liquid medium means a medium in the form of liquid at a usage temperature, and is preferably a medium in the form of liquid at room temperature (27°C). Although no particular limitation is imposed on the liquid medium, and the liquid medium may be desirably selected in accordance with the intended application or the like. The liquid medium preferably contains at least one or more selected from water, an organic solvent, oils and fats, a liquid resin, a liquid plasticizer, and a compound polymerizable through curing.

Hereinafter, the infrared-absorbing particle dispersion liquid of the present embodiment will be described in the following order: (1) contained materials; (2) a production method of the infrared-absorbing particle dispersion liquid; (3) a method of using the infrared-absorbing particle dispersion liquid, and an article using the infrared-absorbing particle dispersion liquid.

### (1) Contained materials

### (1-1) Infrared-absorbing particles

The infrared-absorbing particle dispersion liquid of the present embodiment can contain the above-described infrared-absorbing particles. The complex tungsten oxide particles and the Group 5 element complex oxide particles contained in the infrared-absorbing particles have already been described, and thus descriptions thereof are omitted here.

By changing the ratio in amounts between the complex tungsten oxide particles and the Group 5 element complex oxide particles contained in the infrared-absorbing particles, it is possible to adjust the heat ray shielding property of the infrared-absorbing particles, the transmittance with respect to near-infrared light in the wavelength range of 700 nm or more and 1,000 nm or less, and the color tone. Therefore, the mixing ratio between the complex tungsten oxide particles and the Group 5 element complex oxide particles can be selected in accordance with the optical properties, the color tone, and the like required for the infrared-absorbing particle dispersion liquid, the product obtained using the infrared-absorbing particle dispersion liquid, and the like.

For example, the lower limit of the ratio by mass between the complex tungsten oxide particles and the Group 5 element complex oxide particles contained in the infrared-absorbing particles is preferably 100:20 or more, more preferably 100:25 or more, further preferably 100:30 or more, and particularly preferably 100:50 or more.

Also, the upper limit of the ratio by mass between the complex tungsten oxide particles and the Group 5 element complex oxide particles contained in the infrared-absorbing particles is preferably 100:500 or less, more preferably 100:400 or less, and further preferably 100:300 or less.

That is, for example, when the mass of the complex tungsten oxide particles contained in the infrared-absorbing particles is 100 parts by mass, the infrared-absorbing particles preferably contain the Group 5 element complex oxide particles in an amount of 20 parts by mass or more and 500 parts by mass or less, more preferably 25 parts by mass or more and 400 parts by mass or less, further preferably 30 parts by mass or more and 300 parts by mass or less, and particularly preferably 50 parts by mass or more and 300 parts by mass or less.

There are various standards for the evaluation method of the heat ray shielding property. For example, the heat ray shielding property can be evaluated by using the solar radiation transmittance defined in JIS R 3106 (2019).

Also, the transmittance of light in the wavelength range of 700 nm or more and 1,000 nm or less can be evaluated, for example, by using the transmittance at a wavelength of 850 nm, which is a wavelength in the middle of this wavelength range.

There are also various standards for the evaluation method of the intensity of the blue color tone. For example, the intensity of the blue color tone can be evaluated using the b^{*} value defined in JIS Z 8729 (2004). As the b^{*} value has a larger negative value, i.e., the b^{*} value is a negative value and its absolute value is larger, the blueness is stronger. Conversely, as the b^{*} value has a smaller negative value, i.e., the b* value is a negative value and its absolute value is smaller, or as the b^{*} value has a larger positive value, i.e., the b^{*} value is a positive value and its absolute value is larger, the blueness is suppressed.

### (1-2) Liquid medium

### (1-2-1) Organic solvent

As the organic solvent, various solvents, such as alcohols, ketones, hydrocarbons, and glycols, can be selected. Specifically, the organic solvent can be, for example, one or more selected from alcohol-based solvents, such as isopropyl alcohol, methanol, ethanol, 1-propanol, isopropanol, butanol, pentanol, benzyl alcohol, diacetone alcohol, 1-methoxy-2-propanol, and the like; ketone-based solvents, such as dimethyl ketone, acetone, methyl ethyl ketone, methyl propyl ketone, methyl isobutyl ketone, cyclohexanone, isophorone, and the like; ester-based solvents, such as 3-methylmethoxy-propionate, butyl acetate, and the like; glycol derivatives, such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, propylene glycol ethyl ether acetate, and the like; amides, such as formamide, N-methylformamide, dimethylformamide, dimethylacetamide, N-methyl-2-pyrrolidone, and the like; aromatic hydrocarbons, such as toluene, xylene, and the like; and halogenated hydrocarbons, such as ethylene chloride, chlorobenzene, and the like.

Of these, organic solvents having low polarity are preferable. In particular, isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate, and the like are more preferable. These organic solvents can be used alone or in combination.

### (1-2-2) Fats and oils

As the fats and oils, it is possible to use, for example, one or more selected from dry oils, such as linseed oil, sunflower oil, tung oil, and the like; semi-dry oils, such as sesame oil, cottonseed oil, rapeseed oil, soybean oil, rice bran oil, and the like; non-dry oils, such as olive oil, coconut oil, palm oil, and dehydrated castor oil; fatty acid monoesters obtained by directly esterifying fatty acids of vegetable oils with monoalcohols; ethers; petroleum-based solvents, such as ISOPAR (registered trademark) E, EXXSOL (registered trademark) Hexane, Heptane, E, D30, D40, D60, D80, D95, D110, and D130 (these are available from Exxon Mobil Corporation); and the like.

### (1-2-3) Liquid resin

As the liquid resin, it is possible to use, for example, one or more selected from a liquid acrylic resin, a liquid epoxy resin, a liquid polyester resin, a liquid urethane resin, and the like.

### (1-2-4) Liquid plasticizer

As the liquid plasticizer, it is possible to use, for example, a liquid plasticizer for plastics or the like.

### (1-2-5) Compound polymerizable through curing

As the liquid medium, it is also possible to use a compound polymerizable through curing. As the compound polymerizable through curing to be used as the liquid medium, it is suitable to use a monomer or oligomer that forms a polymer through polymerization reaction or the like caused by heat, light, or water.

Specifically, the compound polymerizable through curing can be a methyl methacrylate monomer, an acrylate monomer, a styrene resin monomer, or the like.

The components contained in the infrared absorbing particle dispersion liquid are not limited to the infrared absorbing particles and the liquid medium. The infrared absorbing particle dispersion liquid can further be supplemented with or contain optional components, if necessary.

For example, an acid or an alkali may be added to the infrared absorbing particle dispersion liquid, if necessary, thereby adjusting the pH of the dispersion liquid.

### (1-3) Dispersant

Also, in order to further increase dispersion stability of the infrared absorbing particles and avoid an increase in the dispersed particles' diameter due to re-aggregation in the above-described infrared absorbing particle dispersion liquid, various surfactants, coupling agents, and the like may be added to the infrared absorbing particle dispersion liquid as a dispersant.

The dispersant, such as surfactants, coupling agents, and the like, can be selected in accordance with the intended application. However, the dispersant preferably includes one or more functional groups selected from an amine-containing group, a hydroxy group, a carboxyl group, and an epoxy group. These functional groups are attached to the surfaces of the infrared absorbing particles to prevent aggregation, and have the effect of uniformly dispersing the infrared absorbing particles, for example, even in an infrared-absorbing particle dispersion formed by using the infrared absorbing particles. A polymer-based dispersant having one or more selected from the above functional groups (group of the functional groups) in the molecule thereof is more desirable.

Commercially available dispersants that are suitably usable include, for example, one or more selected from: SOLSPERSE (registered trademark) 9000, 12000, 17000, 20000, 21000, 24000, 26000, 27000, 28000, 32000, 35100, 54000, and 250 (available from The Lubrizol Corporation, Japan); EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (available from EFKA ADDITIVES); AJISPER (registered trademark) PA111, PB821, PB822, and PN411, and FEYMEX L-12 (available from Ajinomoto Fine-Techno Co., Inc.); DISPERBYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (available from BYK Chemie GmbH); DISPARLON (registered trademark) 1751N, 1831, 1850, 1860, 1934, DA-400N, DA-703-50, DA-725, DA-705, DA-7301, DN-900, NS-5210, and NVI-8514L (available from Kusumoto Chemicals, Ltd.); and ARUFON (registered trademark) UC-3000, UF-5022, UG-4010, UG-4035, and UG-4070 (available from TOAGOSEI CO., LTD.).

A liquid dispersant having a glass transition temperature of less than room temperature can be used instead of the liquid medium. That is, the infrared-absorbing particle dispersion liquid of the present embodiment can contain the infrared-absorbing particles and the liquid dispersant, or can consist of the infrared-absorbing particles and the liquid dispersant. Preferable specific examples of commercially available liquid dispersants include, for example, SOLSPERSE (registered trademark) 20000 available from The Lubrizol Corporation, Japan, and Disparlon (registered trademark) DA234, DA325, and DA375 available from Kusumoto Chemicals, Ltd.

### (1-4) Other additives

The infrared-absorbing particle dispersion liquid of the present embodiment can also contain additives, such as various surfactants, resin components, and the like, for controlling a coating property, a leveling property, and a drying property. When using the additive, the infrared-absorbing particle dispersion liquid preferably contains the additive in a small amount that is in a range of 5% by mass or less of the dispersion liquid. Examples of the surfactants include anionic, cationic, nonionic, and amphoteric surfactants.

For imparting flexibility to the infrared-absorbing particle dispersion obtained using the infrared-absorbing particle dispersion liquid, the dispersion liquid can also contain one or more organic resins selected from a silicone resin, an acrylic resin, a polyester resin, a polyurethane resin, a hydrophilic organic resin containing a polyoxyalkylene group, an epoxy resin, and the like. When using the organic resin, the infrared-absorbing particle dispersion liquid preferably contains the organic resin in a small amount that is in a range of 5% by mass or less of the infrared-absorbing particle dispersion liquid.

For imparting crack resistance to the infrared-absorbing particle dispersion prepared by using the infrared-absorbing particle dispersion liquid, the infrared-absorbing particle dispersion liquid may contain one or more resins selected from a thermosetting resin, a thermoplastic resin, an ultraviolet curable resin, and the like. When adding the resin, the infrared-absorbing particle dispersion liquid preferably contains the resin in a range of 20% by mass or less of the dispersion liquid. Specific examples of the resin include an acrylic resin, an epoxy resin, a polyester resin, an amino resin, a urethane resin, a furan resin, a silicone resin, and modified products of these resins.

The infrared-absorbing particle dispersion liquid of the present embodiment can be an infrared-absorbing particle dispersion liquid having a heat ray shielding property, a high transmittance with respect to near-infrared light having a wavelength of 700 nm or more and 1,000 nm or less, and a suppressed blue color tone.
(2) Production method of infrared-absorbing particle dispersion liquid No particular limitation is imposed on the production method of the infrared-absorbing particle dispersion liquid of the present embodiment. The infrared-absorbing particle dispersion liquid of the present embodiment can be prepared, for example, by adding, to the liquid medium, the above-described infrared-absorbing particles, and the optional dispersant or other additives, followed by dispersing. As described above, the liquid dispersant can be used instead of the liquid medium.

No particular limitation is imposed on the method for dispersing the infrared-absorbing particles or the like in the liquid medium. The method for dispersing the infrared-absorbing particles or the like in the liquid medium is, for example, a pulverizing and dispersing method using a device, such as a bead mill, a ball mill, a sand mill, a paint shaker, an ultrasonic homogenizer, or the like. Of these, a media-based stirring mill, such as a bead mill, a ball mill, a sand mill, a paint shaker, or the like using media, e.g., beads, balls, or Ottawa sand, is suitably used because the infrared-absorbing particles can be adjusted to a desired average particle size for a short period.

Through the pulverizing and dispersing using the media-based stirring mill, micronization progresses by the effect of collision between the infrared-absorbing particles, collision of the media with the infrared-absorbing particles, and the like, simultaneously with dispersing the infrared-absorbing particles into the liquid medium, resulting in pulverizing and dispersing the infrared-absorbing particles.

The infrared-absorbing particle dispersion liquid of the present embodiment contains both the complex tungsten oxide particles and the Group 5 element complex oxide particles as the infrared-absorbing particles. Therefore, by adding the complex tungsten oxide particles and the Group 5 element complex oxide particles to the same liquid medium, and simultaneously pulverizing and dispersing both the complex tungsten oxide particles and the Group 5 element complex oxide particles, the infrared-absorbing particle dispersion liquid containing both the complex tungsten oxide particles and the Group 5 element complex oxide particles may be obtained. Alternatively, by adding the complex tungsten oxide particles and the Group 5 element complex oxide particles to individual liquid media, and individually pulverizing and dispersing the complex tungsten oxide particles and the Group 5 element complex oxide particles in the liquid media, it is possible to obtain a complex tungsten oxide particle dispersion liquid and a Group 5 element complex oxide particle dispersion liquid. Then, these two dispersion liquids may be sufficiently mixed, thereby obtaining the infrared-absorbing particle dispersion liquid.

The concentration of the dispersed infrared-absorbing particles in the infrared-absorbing particle dispersion liquid, i.e., the percentage of the infrared-absorbing particles contained in the infrared-absorbing particle dispersion liquid, is preferably 0.01% by mass or more and 80% by mass or less.

The percentage of the infrared-absorbing particles contained in the infrared-absorbing particle dispersion liquid is preferably 0.01% by mass or more because a sufficient infrared-absorbing property can be exhibited.

Also, the percentage of the infrared-absorbing particles contained in the infrared-absorbing particle dispersion liquid is preferably 80% by mass or less because the infrared-absorbing particles can be uniformly dispersed in the liquid medium. By selecting a combination of the liquid medium, dispersant, coupling agent, and surfactant, the infrared-absorbing particle dispersion liquid of the present embodiment does not cause gelation of the dispersion liquid and sedimentation of the particles, for example, for 6 months or more in a state of being placed in a thermostatic bath at a temperature of 40°C, and can suppress an increase in the average particle size.

### (3) Method of using the infrared-absorbing particle dispersion liquid, and an article using the infrared-absorbing particle dispersion liquid

No particular limitation is imposed on the application or the like of the infrared-absorbing particle dispersion liquid of the present embodiment, and the infrared-absorbing particle dispersion liquid of the present embodiment can be used for various applications.

The infrared-absorbing particle dispersion liquid of the present embodiment can be used as an infrared-absorbing substrate, for example, by being applied to the surface of an appropriate substrate to form a dispersion film. The dispersion film is a type of the infrared-absorbing particle dispersion, and is also a type of a dry solidified product of the infrared-absorbing particle dispersion liquid.

Also, the infrared-absorbing particle dispersion liquid of the present embodiment can be dried and optionally pulverized to form a powdery infrared-absorbing particle dispersion (hereinafter also referred to as a "dispersion powder"). The dispersion powder is a type of the infrared-absorbing particle dispersion, and is also a type of a dry solidified product of the infrared-absorbing particle dispersion liquid. The dispersion powder can be formed into a powdery dispersion in which the infrared-absorbing particles are dispersed in a solid medium, such as a dispersant or the like. Since the dispersion powder contains a dispersant, the infrared-absorbing particles can be mixed with an appropriate medium, thereby readily re-dispersing the infrared-absorbing particles in the medium.

The dispersion powder can be used as a raw material for adding the infrared-absorbing particles in a dispersed state to various infrared-absorbing products. That is, the dispersion powder in which the infrared-absorbing particles are dispersed in a solid medium may be dispersed again in a liquid medium, and used as a dispersion liquid for an infrared-absorbing product. Alternatively, as described below, the dispersion powder may be kneaded into a resin, and used as an infrared-absorbing particle dispersion.

The infrared-absorbing particle dispersion liquid of the present embodiment can be used for various applications utilizing photothermal conversion.

For example, a curable ink composition can be obtained by adding the infrared-absorbing particle dispersion liquid to an uncured thermosetting resin or by adding an uncured thermosetting resin to the infrared-absorbing particle dispersion liquid. The curable ink composition contains the infrared-absorbing particles, and the infrared-absorbing particles function as an auxiliary agent for increasing the amount of heat generated by irradiation with infrared rays or the like. Since the curable ink composition contains the thermosetting resin, by irradiating the curable ink composition with infrared rays or the like, the infrared-absorbing particles function as an auxiliary agent for increasing the amount of heat generated as described above, thereby curing the thermosetting resin. By providing the curable ink composition, for example, on a substrate, it is possible to increase adhesion between the substrate and a cured product of the curable ink composition by irradiation with infrared rays or the like.

Therefore, in addition to the conventional application as an ink, the curable ink composition is suitably used in an application of stereolithography forming a three-dimensional object, for example, by being repeatedly applied and cured by irradiation with infrared rays or the like for lamination.

Besides the above, a thermoplastic resin-containing ink composition can be obtained by adding the infrared-absorbing particles dispersion liquid to a heat-melted thermoplastic resin, or by dispersing the infrared-absorbing particles in an appropriate solvent, followed by addition of a thermoplastic resin having high solubility in the solvent.

By providing the thermoplastic resin-containing ink composition, for example, on a substrate, a cured product of the thermoplastic resin-containing ink composition can be adhered to the substrate after removal of the solvent and heat-melting of the resin by irradiation with infrared rays or the like. At this time, the infrared-absorbing particles contained in the thermoplastic resin-containing ink composition function as an auxiliary agent for increasing the amount of heat generated by irradiation with infrared rays or the like, as in the above-described curable ink composition.

Therefore, in addition to the conventional application as an ink, the thermoplastic resin-containing ink composition is suitably used in an application of stereolithography forming a three-dimensional object, for example, by being repeatedly applied, followed by removal of the solvent and heat-melting of the resin by irradiation with infrared rays or the like for lamination.

The curable ink composition and the thermoplastic resin-containing ink composition described above are examples of the infrared-absorbing particle dispersion liquid of the present embodiment.

### [d] Infrared-absorbing transparent substrate, and a production method of the infrared-absorbing transparent substrate

### [d-1] Infrared-absorbing transparent substrate

Next, a configuration example of the infrared-absorbing transparent substrate of th e present embodiment will be described.

The infrared-absorbing transparent substrate of the present embodiment includes a transparent substrate, and a coating layer disposed over at least one surface of the transparent substrate.

Specifically, as illustrated in FIG. 3, which is a schematic cross-sectional diagram along the lamination direction of the transparent substrate and the coating layer, an infrared-absorbing transparent substrate 30 may include a transparent substrate 31 and a coating layer 32. The coating layer 32 may be disposed over at least one surface 31A of the transparent substrate 31.

(1) Members of the infrared-absorbing transparent substrate The members included in the infrared-absorbing transparent substrate will be described.

### (1-1) Transparent substrate

The transparent substrate may be a resin substrate or a glass substrate.

No particular limitation is imposed on the shape of the transparent substrate, and the shape of the transparent substrate may be any shape selected from a film shape, a board shape, a sheet shape, and the like.

When the transparent substrate is a resin substrate, one or more resins selected from polyester, acrylic, urethane, polycarbonate, polyethylene, an ethylene-vinyl acetate copolymer, vinyl chloride, a fluororesin, and the like may be used as a resin material of the resin substrate.

As the resin material of the resin substrate, polyester is particularly preferable, and polyethylene terephthalate (PET) is more preferable. Therefore, when the transparent substrate is a resin substrate, a polyester film or the like is suitably used as the resin substrate, and a polyethylene terephthalate film is more suitably used as the resin substrate.

In order for the transparent substrate to be readily adhered to the coating layer, the surface of the transparent substrate may be subjected to a surface treatment. Also, for improving adhesion between the resin or glass substrate and the coating layer, it is preferable to dispose an intermediate layer on the resin or glass substrate, and dispose the coating layer on the intermediate layer. No particular limitation is imposed on the configuration of the intermediate layer, and the intermediate layer may include one or more selected from a polymer film, a metal layer, an inorganic layer (e.g., an inorganic oxide layer of silica, titania, zirconia, or the like), an organic/inorganic composite layer, and the like.

### (1-2) Coating layer

The coating layer is a layer of a binder resin containing the infrared-absorbing particles. Although FIG. 3 omits illustration of the infrared-absorbing particles in the coating layer 32, the infrared-absorbing particles are preferably disposed in the binder resin, and more preferably dispersed in the binder resin.

### (Binder resin)

The binder resin used for the coating layer can be selected in accordance with the intended purpose from a UV-curable resin (ultraviolet-curable resin), a thermosetting resin, an electron beam-curable resin, an ambient temperature-curable resin, a thermoplastic resin, and the like. Specifically, a group of resins used for the binder resin of the coating layer include a polyethylene resin, a polyvinyl chloride resin, a polyvinylidene chloride resin, a polyvinyl alcohol resin, a polystyrene resin, a polypropylene resin, an ethylene-vinyl acetate copolymer, a polyester resin, a polyethylene terephthalate resin, a fluororesin, a polycarbonate resin, an acrylic resin, and a polyvinyl butyral resin.

As the binder resin used for the coating layer, one selected from the above group of resins may be used alone, or two or more selected from the above group of resins may be used as a mixture.

The binder resin used for the coating layer is preferably a UV-curable resin from the viewpoints of productivity, device cost, and the like.

The binder used for the coating layer may be a binder using a metal alkoxide. Typical examples of the metal alkoxide are alkoxides of Si, Ti, Al, Zr, and the like. The binder using the metal alkoxide can be hydrolyzed and poly-condensed through heating or the like, thereby forming a coating layer of an oxide film.

No particular limitation is imposed on the thickness of the coating layer, and the thickness of the coating layer is preferably 10 µm or less for practical purposes, and more preferably 6 µm or less. The thickness of the coating layer is preferably 10 µm or less because the coating layer has sufficient pencil hardness to exhibit abrasion resistance, and also, process abnormalities, such as warping of the transparent substrate and the like, can be avoided at the time of volatilization of the solvent in the coating layer and curing of the binder.

No particular limitation is imposed on the amount of the infrared-absorbing particles contained in the coating layer, and the amount of the infrared-absorbing particles per projected area of the transparent substrate/coating layer is preferably 0.1 g/m² or more and 5.0 g/m² or less. The amount of the infrared-absorbing particles per projected area of the transparent substrate/coating layer is preferably 0.1 g/m² or more because a significant infrared-absorbing property can be exhibited compared to the coating layer free from the infrared-absorbing particles. The amount of the infrared-absorbing particles per projected area of the transparent substrate/coating layer is preferably 5.0 g/m² or less because the infrared-absorbing transparent substrate can have particularly high transmittance with respect to visible light.

The "amount of the infrared-absorbing particles" refers to a total amount of the amount of the complex tungsten oxide particles and the amount of the Group 5 element complex oxide particles contained in the infrared-absorbing particles.

### (Infrared-absorbing particles)

A binder layer of the infrared-absorbing transparent substrate of the present embodiment can contain the above-described infrared-absorbing particles. The infrared-absorbing particles can contain, at least, the complex tungsten oxide particles and the Group 5 element complex oxide particles.

The suitable compositions, particle characteristics, and the like of the complex tungsten oxide particles and the Group 5 element complex oxide particles have already been described in "[a] Complex tungsten oxide particles" and "[b] Group 5 element complex oxide particles, and a production method of the Group 5 element complex oxide particles". The same infrared-absorbing particles are suitably used in the coating layer of the infrared-absorbing transparent substrate, and thus descriptions thereof are omitted.

By changing the ratio in amounts between the complex tungsten oxide particles and the Group 5 element complex oxide particles contained in the infrared-absorbing particles, it is possible to adjust the heat ray shielding property of the infrared-absorbing particles, the transmittance with respect to near-infrared light in the wavelength range of 700 nm or more and 1,000 nm or less, and the color tone. Therefore, the mixing ratio between the complex tungsten oxide particles and the Group 5 element complex oxide particles can be selected in accordance with the optical properties, the color tone, and the like required for the infrared-absorbing transparent substrate.

The lower limit of the ratio by mass between the complex tungsten oxide particles and the Group 5 element complex oxide particles contained in the infrared-absorbing particles is preferably 100:20 or more, more preferably 100:25 or more, further preferably 100:30 or more, and particularly preferably 100:50 or more.

Also, the upper limit of the ratio by mass between the complex tungsten oxide particles and the Group 5 element complex oxide particles contained in the infrared-absorbing particles is preferably 100:500 or less, more preferably 100:400 or less, and further preferably 100:300 or less.

That is, for example, when the mass of the complex tungsten oxide particles contained in the infrared-absorbing particles is 100 parts by mass, the infrared-absorbing particles preferably contain the Group 5 element complex oxide particles in an amount of 20 parts by mass or more and 500 parts by mass or less, more preferably 25 parts by mass or more and 400 parts by mass or less, further preferably 30 parts by mass or more and 300 parts by mass or less, and particularly preferably 50 parts by mass or more and 300 parts by mass or less.

The evaluation methods of the heat ray shielding property, the transmittance of light in the wavelength range of 700 nm or more and 1,000 nm or less, and the intensity of the blue color tone have already been described in "[c] Infrared-absorbing particle dispersion liquid", and thus descriptions thereof are omitted.

### (Other additives)

The coating layer may further contain any component other than the binder resin and the infrared-absorbing particles. For example, for imparting a further ultraviolet shielding function to the infrared-absorbing transparent substrate of the present embodiment, the coating layer may contain one or more selected from inorganic particles of titanium oxide, zinc oxide, cerium oxide, and the like, and organics, such as benzophenone, benzotriazole, and the like.

The infrared-absorbing transparent substrate of the present embodiment can be an infrared-absorbing transparent substrate having a heat ray shielding property, a high transmittance with respect to near-infrared light having a wavelength of 700 nm or more and 1,000 nm or less, and a suppressed blue color tone.
[d-2] Production method of the infrared-absorbing transparent substrate The production method of the infrared-absorbing transparent substrate of the present embodiment may include a coating layer forming step of forming the coating layer over the transparent substrate.

In the coating layer forming step, no particular limitation is imposed on the method of forming the coating layer over the transparent substrate. For example, the coating layer can be formed over the transparent substrate by using the infrared-absorbing particle dispersion liquid according to the aspect of the present disclosure.

For example, the infrared-absorbing transparent substrate can be produced in the following manner.

Specifically, a binder resin is added to the infrared-absorbing particle dispersion liquid to obtain a coating liquid. After coating of the coating liquid on the surface of the transparent substrate, the solvent, such as the liquid medium or the like, is evaporated to cure the binder resin by a predetermined method, thereby forming the coating layer in which the infrared-absorbing particles are dispersed in the binder resin.

Also, after applying the infrared-absorbing particle dispersion liquid to the surface of the transparent substrate, and evaporating the solvent, such as the liquid medium or the like, contained in the infrared-absorbing particle dispersion liquid, the binder resin is optionally applied onto the obtained dispersion film of the infrared-absorbing particles, followed by curing, thereby forming the coating layer.

The binder resin suitably used in the coating layer has already been described, and thus descriptions thereof are omitted.

No particular limitation is imposed on the coating method used for forming the coating layer over the transparent substrate, and the coating method may be any method that can coat the infrared-absorbing particle dispersion liquid or the coating liquid onto the surface of the transparent substrate with a desired thickness. It is preferable to use the coating method that can uniformly coat the infrared-absorbing particle dispersion liquid or the coating liquid onto the transparent substrate.

The coating method of the infrared-absorbing particle dispersion liquid or the coating liquid used for forming the coating layer on the transparent substrate can be, for example, one or more selected from bar coating, gravure coating, spray coating, dip coating, and the like.

For example, when a UV-curable resin is used as the binder resin, and the coating liquid is coated onto the transparent substrate through bar coating, first, a coating liquid having a liquid concentration and an additive adjusted to have an appropriate leveling property is provided. Then, the coating liquid is coated onto the transparent substrate using a wire bar having a bar number capable of sufficiently satisfying the thickness of the intended coating layer and the amount of the infrared-absorbing particles to form a coating film. Subsequently, the solvent contained in the coating liquid is removed through drying, and the binder resin is cured by irradiation with ultraviolet rays, thereby forming the coating layer over the transparent substrate.

Although the drying conditions for the coating film vary with the type and ratio of the components used, and the type and ratio of the solvent used, it is typically possible to dry the coating film at a temperature of 60°C or higher and 140°C or lower for 20 seconds or more and 10 minutes or less. No particular limitation is imposed on the method of irradiation by ultraviolet rays. For example, a UV-exposing machine, such as an ultrahigh-pressure mercury lamp or the like, is suitably used.

In addition, the preceding or succeeding step of the formation of the coating layer can control the adhesion between the substrate and the coating layer, the flatness of the coating film at the time of coating, the drying property of the solvent, and the like. Examples of the preceding or succeeding step of the formation of the coating layer include a surface treatment step for the transparent substrate, a pre-baking step (pre-heating of the transparent substrate), a post-baking step (post-heating of the transparent substrate), and the like. The preceding or succeeding step of the formation of the coating layer may be appropriately selected from these. No particular limitation is imposed on the heating conditions in the pre-baking step or the post-baking step, and the heating conditions in the pre-baking step or the post-baking step may be selected in accordance with the type of the transparent substrate or the like. For example, the heating temperature is preferably 80°C or higher and 200°C or lower, and the heating period is preferably 30 seconds or more and 240 seconds or less.

### [e] Infrared-absorbing particle dispersion, and a production method of the infrared-absorbing particle dispersion

### [e-1] Infrared-absorbing particle dispersion

Next, a configuration example of the infrared-absorbing particle dispersion of the present embodiment will be described.

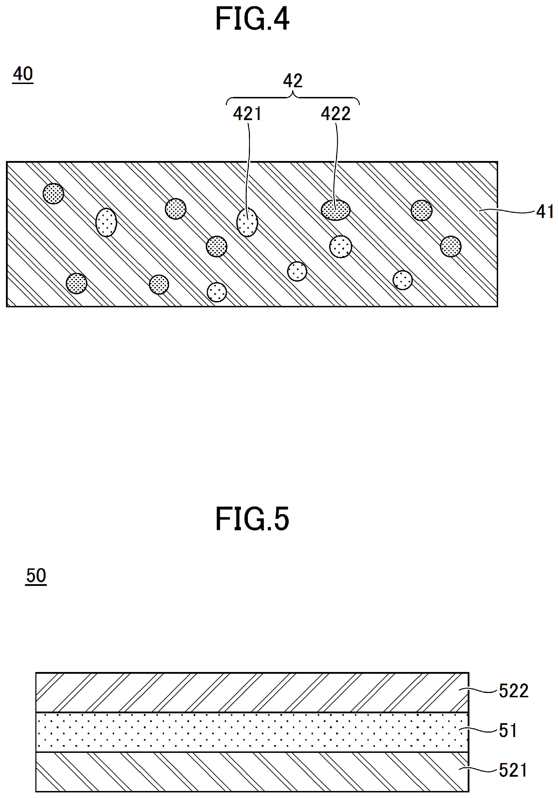

For example, as illustrated in FIG. 4, an infrared-absorbing particle dispersion 40 of the present embodiment may include a solid medium 41 and infrared-absorbing particles 42 disposed in the solid medium 41. The infrared-absorbing particles 42 may include, at least, complex tungsten oxide particles 421 and Group 5 element complex oxide particles 422. The infrared-absorbing particles 42 are preferably dispersed in the solid medium 41.

FIG. 4 is a schematic diagram, and the infrared-absorbing particle dispersion of the present embodiment is not limited to the illustrated form. For example, in FIG. 4, the infrared-absorbing particles 42 are represented as circles, i.e., as spherical particles. However, the shape of the infrared-absorbing particles 42 is not limited to this shape, and can be any shape. The infrared-absorbing particle dispersion 40 may contain additives, if necessary, in addition to the solid medium 41 and the infrared-absorbing particles 42.

Hereinafter, the infrared-absorbing particle dispersion of the present embodiment will be described in the following order: (1) Contained materials; and (2) Shape of the infrared-absorbing particle dispersion.

### (1) Contained materials

### (1-1) Infrared-absorbing particles

The suitable compositions, particle characteristics, and the like of the complex tungsten oxide particles and the Group 5 element complex oxide particles have already been described in "[a] Complex tungsten oxide particles" and "[b] Group 5 element complex oxide particles, and a production method of the Group 5 element complex oxide particles". The same infrared-absorbing particles are suitably used in the infrared-absorbing particle dispersion, and thus descriptions thereof are omitted.

By changing the ratio in amounts between the complex tungsten oxide particles and the Group 5 element complex oxide particles contained in the infrared-absorbing particles, it is possible to adjust the heat ray shielding property of the infrared-absorbing particles, the transmittance with respect to near-infrared light in the wavelength range of 700 nm or more and 1,000 nm or less, and the color tone. Therefore, the mixing ratio between the complex tungsten oxide particles and the Group 5 element complex oxide particles can be selected in accordance with the optical properties, the color tone, and the like required for the infrared-absorbing dispersant.

The lower limit of the ratio by mass between the complex tungsten oxide particles and the Group 5 element complex oxide particles contained in the infrared-absorbing particles is preferably 100:20 or more, more preferably 100:25 or more, further preferably 100:30 or more, and particularly preferably 100:50 or more.

Also, for example, the upper limit of the ratio by mass between the complex tungsten oxide particles and the Group 5 element complex oxide particles contained in the infrared-absorbing particles is preferably 100:500 or less, more preferably 100:400 or less, and further preferably 100:300 or less.

That is, for example, when the mass of the complex tungsten oxide particles contained in the infrared-absorbing particles is 100 parts by mass, the infrared-absorbing particles preferably contain the Group 5 element complex oxide particles in an amount of 20 parts by mass or more and 500 parts by mass or less, more preferably 25 parts by mass or more and 400 parts by mass or less, further preferably 30 parts by mass or more and 300 parts by mass or less, and particularly preferably 50 parts by mass or more and 300 parts by mass or less.

The evaluation methods of the heat ray shielding property, the transmittance of light in the wavelength range of 700 nm or more and 1,000 nm or less, and the intensity of the blue color tone have already been described in "[c] Infrared-absorbing particle dispersion liquid", and thus descriptions thereof are omitted.

Although no particular limitation is imposed on the percentage of the infrared-absorbing particles in the infrared-absorbing particle dispersion according to the present embodiment, the percentage of the infrared-absorbing particles in the infrared-absorbing particle dispersion is preferably 0.5% by mass or more and 80% by mass or less.

### (1-2) Solid medium

The solid medium for use is, for example, a thermoplastic resin. Considering that the infrared-absorbing particle dispersion of the present embodiment is applied to a window material or the like, a thermoplastic resin having sufficient transparency is preferable.

The solid medium for use may be, for example: one resin selected from the group of resins consisting of a polyethylene terephthalate resin, a polycarbonate resin, an acrylic resin, a styrene resin, a polyamide resin, a polyethylene resin, a vinyl chloride resin, an olefin resin, an epoxy resin, a polyimide resin, a fluororesin, an ethylene-vinyl acetate copolymer, and a polyvinyl acetal resin; a mixture of two or more resins selected from the above group of resins; or a copolymer of two or more resins selected from the above group of resins.

When the infrared-absorbing particle dispersion is used as a window material, the solid medium may be selected in consideration of high transparency and typical properties required for window materials, i.e., rigidity, light weight, long-term durability, cost, and the like. Therefore, when the infrared-absorbing particle dispersion is used for the above application, the solid medium is preferably one or more selected from a polyethylene terephthalate resin, a polycarbonate resin, and an acrylic resin, and is more preferably a polycarbonate resin.

When the infrared-absorbing particle dispersion is used as an intermediate layer of the infrared-absorbing laminated transparent substrate described below, the solid medium may be selected in consideration of adhesion to the transparent substrate, weatherability, penetration resistance, and the like. Therefore, when the infrared-absorbing particle dispersion is used for the above application, for example, the solid medium is preferably a polyvinyl acetal resin or an ethylene-vinyl acetate copolymer, and more preferably a polyvinyl butyral resin.

The solid medium is not limited to the resin, and may be a binder using a metal alkoxide. Typical examples of the metal alkoxide are alkoxides of Si, Ti, Al, Zr, and the like. The binder using the metal alkoxide can be hydrolyzed and poly-condensed through heating or the like, thereby forming the infrared-absorbing particle dispersion in which the solid medium contains the oxide.

Also, the dispersion powder described below is a type of the infrared-absorbing particle dispersion of the present embodiment. In this case, for example, one or more selected from a dispersant, a coupling agent, and a surfactant can be used as the solid medium.

### (1-3) Other additive materials

The infrared-absorbing particle dispersion of the present embodiment may contain any additive material, such as a plasticizer or the like, in addition to the infrared-absorbing particles and the solid medium described above.

For example, when the infrared-absorbing particle dispersion is used as an intermediate layer, and the solid medium contained in the infrared-absorbing particle dispersion does not have flexibility or exhibit sufficient adhesion to the transparent substrate, for example, the infrared-absorbing particle dispersion may contain a plasticizer.

The plasticizer for use can be a substance corresponding to the solid medium. For example, when the infrared-absorbing particle dispersion contains the polyvinyl acetal resin as the solid medium, the plasticizer to be contained is, for example, a plasticizer that is a compound of a monohydric alcohol and an organic acid ester, an ester-based plasticizer, such as a polyhydric alcohol organic acid ester compound or the like, and a phosphoric acid-based plasticizer, such as an organophosphate plasticizer or the like. The plasticizers are preferably liquid at room temperature. Of these, preferable is a plasticizer that is an ester compound synthesized from a polyhydric alcohol and a fatty acid.

### (2) Shape of the infrared-absorbing particle dispersion

No particular limitation is imposed on the shape of the infrared-absorbing particle dispersion of the present embodiment, and the infrared-absorbing particle dispersion of the present embodiment preferably has a sheet shape, a board shape, or a film shape. The infrared-absorbing particle dispersion of the present embodiment preferably has a sheet shape, a board shape, or a film shape because the infrared-absorbing particle dispersion can be applied to various applications.

As described below, the infrared-absorbing particle dispersion of the present embodiment can have a granular shape, such as a dispersion powder, a master batch, or the like.

The infrared-absorbing particle dispersion of the present embodiment can be an infrared-absorbing particle dispersion having a heat ray shielding property, a high transmittance with respect to near-infrared light having a wavelength of 700 nm or more and 1,000 nm or less, and a suppressed blue color tone. [e-2] Production method of the infrared-absorbing particle dispersion A production method of the infrared-absorbing particle dispersion will be described in the following order: (1) Production method of the granular infrared-absorbing particle dispersion; and (2) Production method of the infrared-absorbing particle dispersion having the sheet shape, the board shape, or the film shape (the infrared-absorbing film and the infrared-absorbing sheet).
(1) Production method of the granular infrared-absorbing particle dispersion Examples of the granular infrared-absorbing particle dispersion include, for example, a master batch or a dispersion powder in which the below-described infrared-absorbing particles are dispersed in one or more selected from a dispersant, a coupling agent, and a surfactant.

The granular infrared-absorbing particle dispersion can be produced, for example, in accordance with the following procedure.

First, the infrared-absorbing particles are dispersed in an organic solvent along with one or more selected from a dispersant, a coupling agent, and a surfactant, thereby obtaining an organic solvent dispersion liquid (an organic solvent dispersion liquid preparation step). Next, the organic solvent can be removed from the organic solvent dispersion liquid, thereby obtaining a dispersion powder, which is a granular infrared-absorbing particle dispersion in which the infrared-absorbing particles are dispersed in the dispersant (an organic solvent removing step).

Alternatively, the dispersion powder can be obtained without performing the organic solvent dispersion liquid preparation step. Specifically, the dispersion powder can be obtained by performing the organic solvent removing step using, as the organic solvent dispersion liquid, the above-described infrared-absorbing particle dispersion liquid to which one or more selected from a dispersant, a coupling agent, and a surfactant are added.

No particular limitation is imposed on the method for dispersing the infrared-absorbing particles in the organic solvent in the organic solvent dispersion liquid preparation step, and the method may be appropriately selected. The method for dispersing the infrared-absorbing particles in the organic solvent can use a bead mill, a ball mill, a sand mill, an ultrasonic disperser, or the like.

As the organic solvent, various solvents, such as alcohols, ketones, hydrocarbons, and glycols, can be selected. Specific examples of the organic solvent include alcohol-based solvents, such as isopropyl alcohol, methanol, ethanol, 1-propanol, butanol, pentanol, benzyl alcohol, diacetone alcohol, 1-methoxy-2-propanol, and the like; ketone-based solvents, such as dimethyl ketone, acetone, methyl ethyl ketone, methyl propyl ketone, methyl isobutyl ketone, cyclohexanone, isophorone, and the like; ester-based solvents, such as 3-methyl-methoxypropionate, butyl acetate, and the like; glycol derivatives, such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, propylene glycol ethyl ether acetate, and the like; amides, such as formamide, N-methylformamide, dimethylformamide, dimethylacetamide, N-methyl-2-pyrrolidone, and the like; aromatic hydrocarbons, such as toluene, xylene, and the like; and halogenated hydrocarbons, such as ethylene chloride, chlorobenzene, and the like.

Of these, organic solvents having low polarity are preferrable, and isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate, and the like are more preferrable. These solvents may be used alone or in combination.

One or more selected from a dispersant, a coupling agent, and a surfactant can be selected in accordance with the intended application, and are preferably those containing, as a functional group, one or more selected from an amine-containing group, a hydroxy group, a carboxyl group, and an epoxy group. These functional groups adsorb on the surfaces of the infrared-absorbing particles, and prevent aggregation of the infrared-absorbing particles, thereby exhibiting the effect of uniformly dispersing the infrared-absorbing particles in the infrared-absorbing particle dispersion.

Examples of the suitably usable dispersant include, but are not limited to, phosphate ester compounds, polymeric dispersants, silane-based coupling agents, titanate-based coupling agents, aluminum-based coupling agents, and the like. Examples of the polymeric dispersants include acrylic polymer dispersants, urethane-based polymer dispersants, acrylic block copolymer-based polymer dispersants, polyether dispersants, polyester-based polymer dispersants, and the like.

The concentration of the infrared-absorbing particles relative to the organic solvent in the organic solvent dispersion liquid is preferably 1% by mass or more and 50% by mass or less. When the concentration of the infrared-absorbing particles relative to the organic solvent is 1% by mass or more, it is possible to avoid an increase in production cost due to the excessively large amount of the organic solvent to be removed. When the concentration of the infrared-absorbing particles relative to the organic solvent is 50% by mass or less, it is possible to avoid difficulty in dispersing the particles due to the particles being readily aggregated, or to avoid difficulty in handling due to the significantly increased viscosity of the liquid.

The infrared-absorbing particles in the organic solvent dispersion liquid are preferably dispersed to have an average particle size of 40 nm or less. The average particle size of the infrared-absorbing particles is preferably 40 nm or less because optical characteristics, such as haze and the like, in the infrared-absorbing film produced using the infrared-absorbing particle dispersion liquid are improved.

By removing the organic solvent from the organic solvent dispersion liquid, it is possible to obtain the dispersion powder, which is a type of the infrared-absorbing particle dispersion. As a method for removing the organic solvent from the organic solvent dispersion liquid, it is suitable to use vacuum drying. Specifically, the organic solvent dispersion liquid is dried in vacuum with stirring, thereby separating the infrared-absorbing particle-containing composition and the organic solvent component from each other. A device used for vacuum drying is, for example, a vacuum stirring-type dryer, and any device having the above function may be used without particular limitation. The pressure value at the time of vacuum drying is appropriately selected.

When vacuum drying is used for removing the organic solvent from the organic solvent dispersion liquid, the removal efficiency of the organic solvent from the organic solvent dispersion liquid is improved. In addition, since the dispersion powder is not exposed to a high temperature for a long period, the infrared-absorbing particles dispersed in the dispersion powder do not aggregate, which is preferable. Further, the productivity of the dispersion powder is improved, and the evaporated organic solvent can be readily recovered, which is preferable from the viewpoint of environmental consideration.

The organic solvent remaining in the dispersion powder obtained after vacuum drying is preferably 5% by mass or less. The organic solvent remaining in the dispersion powder obtained after vacuum drying is preferably 5% by mass or less because, when the dispersion powder is processed into an infrared-absorbing laminated transparent substrate or the like, bubbles are not generated, and good appearance and optical characteristics are maintained.

Also, the master batch can be obtained by dispersing the infrared-absorbing particles or the dispersion powder in a resin, followed by pelletizing the resin. The master batch is a type of the infrared-absorbing particle dispersion of the present embodiment.

The master batch can be produced, for example, in accordance with the following procedure. First, the infrared-absorbing particles or the dispersion powder is uniformly mixed with granules or pellets of a thermoplastic resin and other optional additives. Next, the resulting mixture is kneaded with a vent-type uniaxial or biaxial extruder, and processed into pellets by a typical method of cutting a melt-extruded strand.

No particular limitation is imposed on the shape of the master batch. For example, the shape of the master batch may be cylindrical or prismatic. When producing the master batch, it is possible to employ what is referred to as a hot cut method in which the melt extrudate is cut directly. When the hot cut method is used, the produced master batch typically has a substantially spherical shape.

### (2) Production method of the infrared-absorbing particle dispersion having the sheet shape, the board shape, or the film shape (the infrared-absorbing film and the infrared-absorbing sheet)

The infrared-absorbing particle dispersion having the sheet shape, the board shape, or the film shape can be produced by mixing, dispersing, and molding the dispersion powder or the master batch into a transparent resin, which is the solid medium. The infrared-absorbing particle dispersion having the sheet shape, the board shape, or the film shape of the present embodiment can be an infrared-absorbing particle dispersion having a heat ray shielding property, a high transmittance with respect to near-infrared light having a wavelength of 700 nm or more and 1,000 nm or less, and a suppressed blue color tone.

The solid medium that is suitably used in the production of the infrared-absorbing particle dispersion having the sheet shape, the board shape, or the film shape has already been described, and thus descriptions thereof are omitted.

For the production of the infrared-absorbing particle dispersion having the sheet shape, the board shape, or the film shape, first, the dispersion powder or the master batch, the solid medium, and, as desired, a plasticizer or other additives can be kneaded together. Next, the kneaded product can be molded into a desired shape, such as a flat or curved sheet material or the like, by a publicly known method, such as extrusion molding, injection molding, or the like, thereby producing the infrared-absorbing particle dispersion.

No particular limitation is imposed on the method for molding the infrared-absorbing particle dispersion in the sheet shape, the board shape, or the film shape, and the molding method can be any publicly known method. For example, the molding method for use can be a calender roll method, an extrusion method, a casting method, an inflation method, or the like.

### [f] Infrared-absorbing laminated transparent substrate

Next, a configuration example of the infrared-absorbing laminated transparent substrate of the present embodiment will be described.

FIG. 5 is a schematic cross-sectional diagram of the infrared-absorbing laminated transparent substrate along the lamination direction of the transparent substrate and the infrared-absorbing particle dispersion.

As illustrated in FIG. 5, an infrared-absorbing laminated transparent substrate 50 may include a plurality of transparent substrates 521 and 522, and an infrared-absorbing particle dispersion 51 according to the aspect of the present disclosure. The infrared-absorbing particle dispersion 51 may be disposed between the plurality of transparent substrates 521 and 522. Although FIG. 5 illustrates an example in which the two transparent substrates 521 and 522 are included, the infrared-absorbing laminated transparent substrate is not limited to the illustrated form. Also, FIG. 5 omits illustration of the infrared-absorbing particles contained in the infrared-absorbing particle dispersion 51.

### (Infrared-absorbing particle dispersion)

A configuration example of the infrared-absorbing particle dispersion serving as an infrared-absorbing intermediate film will be described below.

No particular limitation is imposed on the shape of the infrared-absorbing particle dispersion. The infrared-absorbing particle dispersion preferably has a sheet shape, a board shape, or a film shape.

When the infrared-absorbing particle dispersion is used as the infrared-absorbing intermediate film, the solid medium described for the infrared-absorbing particle dispersion can be used. However, from the viewpoint of enhancing the adhesion strength between the infrared-absorbing intermediate film and the transparent substrate, the solid medium is preferably a polyvinyl acetal resin.

When the infrared-absorbing particle dispersion does not have flexibility or exhibit sufficient adhesion to the transparent substrate, it is preferable to add a plasticizer to the infrared-absorbing particle dispersion in accordance with the type of the solid medium. For example, when the solid medium used for the infrared-absorbing particle dispersion is a polyvinyl acetal resin, addition of a plasticizer for the polyvinyl acetal resin is beneficial for enhancing the adhesion to the transparent substrate.

The plasticizer for use can be a substance that works as a plasticizer for the solid medium contained in the infrared-absorbing particle dispersion. Examples of the plasticizer applied to the infrared-absorbing particle dispersion using the polyvinyl acetal resin as the solid medium include a plasticizer that is a compound of a monohydric alcohol and an organic acid ester, an ester-based plasticizer, such as a polyhydric alcohol organic acid ester compound or the like, and a phosphoric acid-based plasticizer, such as an organophosphate plasticizer or the like. The plasticizers are preferably liquid at room temperature. Of these, preferable is a plasticizer that is an ester compound synthesized from a polyhydric alcohol and a fatty acid.

The infrared-absorbing particle dispersion may contain at least one selected from the group consisting of a silane coupling agent, a metal salt of a carboxylic acid, a hydroxide of a metal, and a carbonate of a metal. No particular limitation is imposed on the metal forming the metal salt of the carboxylic acid, the hydroxide of the metal, and the carbonate of the metal, and the metal is preferably at least one selected from sodium, potassium, magnesium, calcium, manganese, cesium, lithium, rubidium, and zinc. In the near-infrared-absorbing intermediate film, the amount of at least one selected from the group consisting of the metal salt of the carboxylic acid, the hydroxide of the metal, and the carbonate of the metal is preferably 1% by mass or more and 100% by mass or less relative to the infrared-absorbing particles.

In addition to the infrared-absorbing particles, the infrared-absorbing particle dispersion may contain, if necessary, at least one type of particles selected from oxide particles, complex oxide particles, and boride particles, containing two or more elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Tb, Lu, Sr, and Ca. The infrared-absorbing particle dispersion may contain such particles in a range of 5% by mass or more and 95% by mass or less relative to 100% by mass that is a total of those particles and the infrared-absorbing particles.

In the infrared-absorbing laminated transparent substrate, at least one layer of the intermediate films disposed between the transparent substrates may contain an ultraviolet absorber. The ultraviolet absorber is, for example, one or more selected from a compound having a malonic acid ester structure, a compound having an oxalic acid anilide structure, a compound having a benzotriazole structure, a compound having a benzophenone structure, a compound having a triazine structure, a compound having a benzoate structure, a compound having a hindered amine structure, and the like.

The intermediate layer of the infrared-absorbing laminated transparent substrate may consist of the infrared-absorbing particle dispersion, or may include other layers.

### (Transparent substrate)

As the transparent substrate, one or more selected from a plate glass, a plate-shaped plastic, and a film-shaped plastic, which are transparent in the visible light region, can be suitably used.

When the plastic is used as the transparent substrate, no particular limitation is imposed on the material of the plastic, and the material of the plastic may be selected in accordance with the intended application. For example, it is possible to use one or more selected from a polycarbonate resin, an acrylic resin, a polyester resin, a polyamide resin, a vinyl chloride resin, an olefin resin, an epoxy resin, a polyimide resin, an ionomer resin, a fluororesin, and the like. It is suitable to use a polyethylene terephthalate resin as the polyester resin.

The transparent substrate may contain particles having a solar radiation shielding function. The particles having the solar radiation shielding function for use can be infrared-absorbing particles having a near-infrared ray shielding property.

By using the infrared-absorbing particle dispersion according to the aspect of the present disclosure as a constituent member of the intermediate layer between the plurality of transparent substrates, it is possible to achieve a heat ray shielding property, a high transmittance with respect to near-infrared light having a wavelength of 700 nm or more and 1,000 nm or less, and a suppressed blue color tone.

The infrared-absorbing laminated transparent substrate of the present embodiment can be obtained through bonding by a publicly known method to integrate a plurality of transparent substrates facing each other with the infrared-absorbing particle dispersion therebetween.

Here, the infrared-absorbing laminated transparent substrate in which the infrared-absorbing particle dispersion is disposed between the transparent substrates has been described. The infrared-absorbing particle dispersion is not limited to the form in which the infrared-absorbing particle dispersion is used in combination with the transparent substrates, and the infrared-absorbing particle dispersion alone can be used. That is, the infrared-absorbing particle dispersion alone according to the present embodiment can be an infrared-absorbing particle dispersion.

The infrared-absorbing laminated transparent substrate according to the present embodiment is not limited to the form in which the infrared-absorbing particle dispersion is disposed between the transparent substrates as described above. The infrared-absorbing laminated transparent substrate can have any configuration, as long as the infrared-absorbing laminated transparent substrate has a laminated structure including the infrared-absorbing particle dispersion and the transparent substrates.

The infrared absorption laminated transparent substrate of the present embodiment can be an infrared absorption laminated transparent substrate having a heat ray shielding property, a high transmittance with respect to near-infrared light having a wavelength of 700 nm or more and 1,000 nm or less, and a suppressed blue color tone.

### EXAMPLES

Hereinafter, the present invention will be described in more detail by way of examples. However, the present invention is not limited to the examples.

### (1) Evaluation methods

First, evaluation methods in the following Examples, Comparative Examples, and Reference Examples (which hereinafter may be collectively referred to as "Experimental Examples") will be described.

### (1-1) Transmittance

(1-1-1) Spectral transmittance of infrared-absorbing particle dispersion liquid The measurement of the transmittance of the infrared-absorbing particle dispersion liquid obtained in each Experimental Example with respect to light having a wavelength of 300 nm or more and 2,100 nm or less was performed by retaining the infrared-absorbing particle dispersion liquid in a spectrophotometer cell (obtained from GL Sciences Inc., model number: S10-SQ-1, material: synthetic quartz, and optical path length: 1 mm). The transmittance was measured using a spectrophotometer UH4150 obtained from Hitachi, Ltd.

The transmittance at a wavelength of 850 nm was determined from the obtained transmittance curve.

For the measurement, the transmittance was measured in a state in which the above cell was filled with a solvent of the dispersion liquid (methyl isobutyl ketone), thereby determining the baseline of the transmittance measurement. Therefore, the spectral transmittance, visible light transmittance, and solar radiation transmittance described below exclude the contributions of light reflection at the cell surface for the spectrophotometer and light absorption of the solvent, and only the light absorption by the infrared-absorbing particles is calculated.

### (1-1-2) Spectral transmittance of the infrared-absorbing transparent substrate and the infrared-absorbing particle dispersion

The transmittance of the infrared-absorbing transparent substrate and the infrared-absorbing particle dispersion with respect to light having a wavelength of 300 nm or more and 2,100 nm or less was measured using a spectrophotometer UH4150 obtained from Hitachi, Ltd.

### (1-1-3) Visible light transmittance: VLT

The visible light transmittance (hereinafter also referred to as "VLT") was calculated in accordance with JIS R 3106 (2019) from the transmittance with respect to light having a wavelength of 380 nm or more and 780 nm or less.

### (1-1-4) Solar radiation transmittance: ST

The solar radiation transmittance (hereinafter also referred to as "ST") was calculated in accordance with JIS R 3106 (2019) from the transmittance with respect to light having a wavelength of 300 nm or more and 2,100 nm or less.

### (1-2) Average particle size

The average particle size was measured by a particle size distribution analyzer (ELS -8000, obtained from Otsuka Electronics Co., Ltd.) based on a dynamic light scattering method. Then, from the obtained particle size distribution, an average particle size was calculated. The average particle size was a volume average particle size weighted by the particle volume, and was obtained by dividing the sum of the diameters of individual particles, multiplied by the volume of the particles, by the total volume of the particles in a set of particles.

### (1-3) Color tone

The color tone value b^{*} was determined in accordance with JIS Z 8701 (1999) and JIS Z 8729 (2004) from the transmittance with respect to light in the wavelength range of 380 nm or more and 780 nm or less. The weighting factor used for the calculation of the color tone was D65 light in the light source and 10 degrees in the viewing angle.

### (1-4) Powder X-ray diffraction pattern

Powder XRD (X-ray diffraction) measurement was performed using a D2 PHASER (obtained from BRUKER Corporation) tabletop XRD device.

### (2) Conditions and procedure of experimental examples

### [Example 1]

### (Preparation of complex tungsten oxide particles)

Powders of tungstic acid (H₂WO₄) and cesium carbonate (Cs₂CO₃) were weighed such that the ratio of Cs/W (ratio by mole) would be 0.33, followed by sufficient mixing in an agate mortar, thereby obtaining a powder mixture. The obtained powder mixture was heated while being supplied with a gas containing 5% by volume of H₂ with N₂ gas as a carrier, subjected to a reducing treatment at a temperature of 600°C for 1 hour, and then fired at 800°C for 30 minutes in an N₂ gas atmosphere, thereby obtaining a powder of Cs_{0.33}WO₃, i.e., a complex tungsten oxide. The powder was measured through powder XRD, and thus it was confirmed that the powder was formed of a single phase of Cs_{0.33}WO₃ crystals.

For the sake of convenience, the complex tungsten oxide is represented by Cs_{0.33}WO₃. However, a portion of oxygen is deficient due to a reducing treatment in the production process. As a result, when the complex tungsten oxide is represented by a general formula MₓWO_{3-y}, y satisfies 0<y≤0.46. The same applies to the complex tungsten oxide particles obtained in Examples 13 and 14.

### (Preparation of complex tungsten oxide particle dispersion liquid)

20% by mass of the above Cs_{0.33}WO₃ powder, 10% by mass of an acrylic polymer dispersant having an amine-containing group as a functional group (an acrylic dispersant having an amine value of 48 mg KOH/g and a decomposition temperature of 250°C) (hereinafter also referred to as "dispersant a"), and 70% by mass of methyl isobutyl ketone were weighed. These were charged into a paint shaker containing ZrO₂ beads 0.3 mm in diameter, and pulverized and dispersed for 10 hours, thereby obtaining a complex tungsten oxide particle dispersion liquid (hereinafter also referred to as a "Cs_{0.33}WO₃ particle dispersion liquid").

### (Preparation of Group 5 element complex oxide particles)

Powders of sodium carbonate (Na₂CO₃) and niobium oxide (Nb₂O₅) were weighed such that the ratio of Na/Nb (ratio by mole) would be 1.0, followed by sufficient mixing in an agate mortar, thereby obtaining a powder mixture. The obtained powder mixture was fired at a temperature of 1,000°C for 5 hours in an atmospheric atmosphere, thereby obtaining an NaNbO₃ powder. The powder was measured through powder XRD, and thus it was confirmed that the powder was formed of a single phase of NaNbO₃ crystals.

Powders of strontium carbonate (SrCO₃) and niobium oxide (Nb₂O₅) were weighed such that the ratio of Sr/Nb (ratio by mole) would be 1.25, followed by sufficient mixing in an agate mortar, thereby obtaining a powder mixture. The obtained powder mixture was fired at a temperature of 1,300°C for 15 hours in an atmospheric atmosphere, thereby obtaining an Sr₅Nb₄O₁₅ powder. The powder was measured through powder XRD, and thus it was confirmed that the powder was formed of a single phase of Sr₅Nb₄O₁₅ crystals.

Powders of NaNbO₃, Sr₅Nb₄O₁₅, and niobium (Nb) were weighed such that the ratio of Na/Sr/Nb (ratio by mole) would be 0.75/0.25/1.0, followed by sufficient mixing in an agate mortar, thereby obtaining a powder mixture. The obtained powder mixture was pressed into a pellet form, followed by firing in an argon atmosphere at a temperature of 1,400°C for 5 hours, thereby obtaining a powder of Na_{0.75}Sr_{0.25}NbO₃, i.e., the Group 5 element complex oxide particles. The powder was measured through powder XRD, and thus it was confirmed that the powder was formed of a single phase of Na_{0.75}Sr_{0.25}NbO₃ crystals.

### (Preparation of Group 5 element complex oxide particle dispersion liquid)

10% by mass of the above Na_{0.75}Sr_{0.25}NbO₃ powder, 5% by mass of the dispersant a, and 85% by mass of methyl isobutyl ketone were weighed. These were charged into a paint shaker containing ZrO₂ beads 0.3 mm in diameter, and pulverized and dispersed for 15 hours, thereby obtaining the Group 5 element complex oxide particle dispersion liquid (hereinafter also referred to as an "Na_{0.75}Sr_{0.25}NbO₃ particle dispersion liquid").

### (Preparation of infrared-absorbing particle dispersion liquid)

The Cs_{0.33}WO₃ particle dispersion liquid and the Na_{0.75}Sr_{0.25}NbO₃ particle dispersion liquid were sufficiently mixed such that the ratio by mass between the Cs_{0.33}WO₃ particles and the Na_{0.75}Sr_{0.25}NbO₃ particles contained in the dispersion liquid would be 100:50, thereby obtaining the infrared-absorbing particle dispersion liquid.

The average particle size of the infrared-absorbing particles contained in the infrared-absorbing particle dispersion liquid was measured to be 25 nm.

The infrared-absorbing particle dispersion liquid was diluted with methyl isobutyl ketone, and placed into a spectrophotometer cell, followed by measuring the spectral transmittance. From the transmittance profile measured by adjusting the dilution rate such that the visible light transmittance would be 80.0%, the solar radiation transmittance was 42.0%, the transmittance at a wavelength of 850 nm was 17.8%, and the b* value was -0.9. These measurement results are shown in Table 1.

The columns of "Evaluation" in Table 1 show the evaluations of the adjacent solar radiation transmittance, the adjacent transmittance at a wavelength of 850 nm, and the adjacent b*. The evaluations are classified into three ranks: ⊚ (very good), ∘ (good), and × (bad). That is, ⊚ is the highest evaluation, and the evaluations decrease in the order of ∘ and ×.

The evaluation criteria for the ST are ⊚ for less than 45%, ∘ for 45% or more and less than 50%, and × for 50% or more.

The evaluation criteria for the 850 nm transmittance (spectral transmittance at a wavelength of 850 nm) are ⊚ for 30% or more, ∘ for 15% or more and less than 30%, and × for less than 15%.

The evaluation criteria for b* are ⊚ for 0.0 or more and 10.0 or less, ∘ for more than -2.0 and less than 0.0, and × for -2.0 or less. The higher the evaluation for b*, the more the blueness is suppressed, i.e., the more the color tone becomes neutral.

Using the prepared infrared-absorbing particle dispersion liquid, the following infrared-absorbing transparent substrate and infrared-absorbing particle dispersion were produced.

### <Infrared-absorbing transparent substrate>

50 parts by mass of Aronix UV-3701 (hereinafter referred to as UV-3701) obtained from TOAGOSEI CO., LTD., i.e., an ultraviolet-curable resin for hard coating, was added to 100 parts by mass of the infrared-absorbing particle dispersion liquid, followed by mixing, thereby preparing a coating liquid. Then, the coating liquid was applied onto a polyethylene terephthalate film (HPE-50, obtained from TOYOBO CO., LTD.), serving as the transparent substrate, by use of a bar coater, thereby forming a coating film. In the other experimental examples, the same polyethylene terephthalate film (hereinafter also referred to as a "PET film") was used as the transparent substrate when producing the infrared-absorbing transparent substrate.

The PET film, on which the coating film was formed, was dried at 80°C for 60 seconds to evaporate the solvent, followed by curing the ultraviolet curable resin using a high-pressure mercury lamp, thereby producing an infrared-absorbing film as the infrared-absorbing transparent substrate provided with the coating layer containing the infrared-absorbing particles.

In the production of the infrared-absorbing film described above, the visible light transmittance was set to 71.4% by adjusting the concentration of the infrared-absorbing particles in the coating liquid, and the thickness of the coating layer.

The optical characteristics of the infrared-absorbing film were measured, and as a result, the solar radiation transmittance was 37.4%, the transmittance at a wavelength of 850 nm was 16.0%, and the b* value was -0.1. The evaluation results are shown in Table 2.

The columns of "Evaluation" in Table 2 show the evaluations of the adjacent solar radiation transmittance, the adjacent transmittance at a wavelength of 850 nm, and the adjacent b*. The evaluations are classified into three ranks: ⊚ (very good), ∘ (good), and × (bad). That is, ⊚ is the highest evaluation, and the evaluations decrease in the order of ∘ and ×.

The evaluation criteria for the ST are ⊚ for less than 40%, ∘ for 40% or more and less than 45%, and × for 45% or more.

The evaluation criteria for the 850 nm transmittance (spectral transmittance at a wavelength of 850 nm) are ⊚ for 30% or more, ∘ for 15% or more and less than 30%, and × for less than 15%.

The evaluation criteria for b* are ⊚ for 0.5 or more and 10.0 or less, ∘ for -1.2 or more and less than 0.5, and × for less than -1.2.

### <Infrared-absorbing particle dispersion>

The dispersant a was further added to the infrared-absorbing particle dispersion liquid, and was adjusted such that the ratio by mass of the dispersant a to the infrared-absorbing particles, i.e., [dispersant a/infrared-absorbing particles], would be 3. Next, methyl isobutyl ketone was removed from the infrared-absorbing particle dispersion liquid using a spray dryer, thereby obtaining an infrared-absorbing particle dispersion powder (hereinafter also referred to as a "dispersion powder").

The dispersion powder was added to a polycarbonate resin, i.e., a thermoplastic resin, such that the visible light transmittance of an infrared-absorbing sheet (2.0 mm thick), i.e., the infrared-absorbing particle dispersion to be produced, would be 72.0%, thereby preparing an infrared-absorbing sheet producing composition.

The prepared infrared-absorbing sheet producing composition was kneaded at 280°C using a twin-screw extruder, extruded from a T-die, and formed into a 2.0 mm-thick sheet material by a calender roll method, thereby obtaining an infrared-absorbing sheet as an infrared-absorbing particle dispersion according to Example 1.

The optical characteristics of the obtained infrared-absorbing sheet according to Example 1 were measured, and as a result, the visible light transmittance was 72.0%, the solar radiation transmittance was 37.5%, the transmittance at a wavelength of 850 nm was 16.0%, and the b* value was -0.3. These measurement results are shown in Table 3.

The columns of "Evaluation" in Table 3 show the evaluations of the adjacent solar radiation transmittance, the adjacent transmittance at a wavelength of 850 nm, and the adjacent b*. The evaluations are classified into three ranks: ⊚ (very good), ∘ (good), and × (bad). That is, ⊚ is the highest evaluation, and the evaluations decrease in the order of ∘ and ×.

The evaluation criteria for the ST are ⊚ for less than 40%, ∘ for 40% or more and less than 45%, and × for 45% or more.

The evaluation criteria for the 850 nm transmittance (spectral transmittance at a wavelength of 850 nm) are ⊚ for 30% or more, ∘ for 15% or more and less than 30%, and × for less than 15%.

The evaluation criteria for b* are ⊚ for 0.5 or more and 10.0 or less, ∘ for -1.2 or more and less than 0.5, and × for less than -1.2.

### [Examples 2 to 4]

In the preparation of the infrared-absorbing particle dispersion liquid, the mixing ratio between the Cs_{0.33}WO₃ particle dispersion liquid and the Na_{0.75}Sr_{0.25}NbO₃ particle dispersion liquid was changed such that the ratio by mass between the Cs_{0.33}WO₃ particles and the Na_{0.75}Sr_{0.25}NbO₃ particles in the infrared-absorbing particle dispersion liquid would be the values shown in the corresponding columns of "Ratio by mass" in Table 1. For example, in Example 2, the dispersion liquids were weighed, and then mixed, such that the ratio by mass between the Cs_{0.33}WO₃ particles and the Na_{0.75}Sr_{0.25}NbO₃ particles (ratio by mass) contained in the infrared-absorbing particle dispersion liquid would be 100:100.

Except for the above, the same procedure as in Example 1 was performed under the same conditions as in Example 1, thereby producing infrared-absorbing particle dispersion liquids, infrared-absorbing transparent substrates, and infrared-absorbing particle dispersions according to Examples 2 to 4.

The infrared-absorbing particle dispersion liquid, the infrared-absorbing transparent substrate, and the infrared-absorbing particle dispersion obtained in each Example were evaluated in accordance with the same procedure as in Example 1. The evaluation results are shown in Tables 1 to 3.

### [Example 5]

For the infrared-absorbing particle dispersion liquid prepared in Example 1, the solar radiation transmittance, the transmittance at a wavelength of 850 nm, and the b^{*} value were measured from a transmittance profile, which was obtained when the spectral transmittance was measured by adjusting the dilution rate such that the visible light transmittance would be 85.0%. The measurement results are shown in Table 1.

### (Production of infrared-absorbing transparent substrate and infrared-absorbing particle dispersion)

An infrared-absorbing transparent substrate was obtained using the coating liquid prepared in Example 1 under the same conditions as in Example 1, except that the coating thickness at the time of bar coating was adjusted such that the visible light transmittance would be 75.8%. The infrared-absorbing transparent substrate was evaluated in accordance with the same procedure as in Example 1.

Also, the dispersion powder prepared in Example 1 was added to a polycarbonate resin, i.e., a thermoplastic resin, such that the visible light transmittance of an infrared-absorbing sheet (2.0 mm thick) to be produced would be 76.5%, thereby preparing an infrared-absorbing sheet producing composition.

An infrared-absorbing sheet, i.e., an infrared-absorbing particle dispersion according to Example 5, was obtained in accordance with the same procedure as in Example 1 under the same conditions as in Example 1, except that the above infrared-absorbing sheet producing composition was used. The infrared-absorbing sheet, i.e., the infrared-absorbing particle dispersion, was evaluated in accordance with the same procedure as in Example 1. The evaluation results are shown in Tables 1 to 3.

### [Example 6]

### (Preparation of Group 5 element complex oxide particles)

Powders of NaNbO₃, Sr₅Nb₄O₁₅, and niobium (Nb) prepared in Example 1 were weighed such that the ratio of Na/Sr/Nb (ratio by mole) would be 0.5/0.5/1.0, followed by sufficient mixing in an agate mortar, thereby obtaining a powder mixture. The obtained powder mixture was pressed into a pellet form, followed by firing in vacuum at a temperature of 1,400°C for 5 hours, thereby obtaining a powder of Na_{0.5}Sr_{0.5}NbO₃, i.e., the Group 5 element complex oxide particles. The powder was measured through powder XRD, and thus it was confirmed that the powder was formed of a single phase of Na_{0.5}Sr_{0.5}NbO₃ crystals.

### (Preparation of Group 5 element complex oxide particle dispersion liquid)

10% by mass of the above Na_{0.5}Sr_{0.5}NbO₃ powder, 5% by mass of the dispersant a, and 85% by mass of methyl isobutyl ketone were weighed. These were charged into a paint shaker containing ZrO₂ beads 0.3 mm in diameter, and pulverized and dispersed for 15 hours, thereby obtaining the Group 5 element complex oxide particle dispersion liquid (hereinafter also referred to as an "Na_{0.5}Sr_{0.5}NbO₃ particle dispersion liquid").

### (Preparation of infrared-absorbing particle dispersion liquid)

The Cs_{0.33}WO₃ particle dispersion liquid and the Na_{0.5}Sr_{0.5}NbO₃ particle dispersion liquid were mixed such that the ratio by mass between the Cs_{0.33}WO₃ particles and the Na_{0.5}Sr_{0.5}NbO₃ particles contained in the dispersion liquid would be 100:50, thereby obtaining the infrared-absorbing particle dispersion liquid. The Cs_{0.33}WO₃ particle dispersion liquid used was the Cs_{0.33}WO₃ particle dispersion liquid prepared in Example 1.

The average particle size of the infrared-absorbing particles contained in the infrared-absorbing particle dispersion liquid was measured to be 24 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 6 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Table 1.

### [Examples 7 to 9]

In the preparation of the infrared-absorbing particle dispersion, the mixing ratio between the Cs_{0.33}WO₃ particle dispersion liquid and the Na_{0.5}Sr_{0.5}NbO₃ particle dispersion liquid was changed such that the ratio by mass between the Cs_{0.33}WO₃ particles and the Na_{0.5}Sr_{0.5}NbO₃ particles in the infrared-absorbing particle dispersion liquid would be the values shown in the corresponding columns of "Ratio by mass" in Table 1. For example, in Example 7, the dispersion liquids were weighed, and then mixed, such that the ratio by mass between the Cs_{0.33}WO₃ particles and the Na_{0.5}Sr_{0.5}NbO₃ particles (ratio by mass) contained in the infrared-absorbing particle dispersion liquid would be 100:100.

Except for the above, the same procedure as in Example 6 was performed under the same conditions as in Example 6, thereby producing infrared-absorbing particle dispersion liquids, infrared-absorbing transparent substrates, and infrared-absorbing particle dispersions according to Examples 7 to 9.

The infrared-absorbing particle dispersion liquid, the infrared-absorbing transparent substrate, and the infrared-absorbing particle dispersion obtained in each Example were evaluated in accordance with the same procedure as in Example 1. The evaluation results are shown in Tables 1 to 3.

### [Example 10]

### (Preparation of Group 5 element complex oxide particles)

Powders of barium oxide (BaO) and niobium oxide (Nb₂O₅) were weighed such that the ratio of Ba/Nb (ratio by mole) would be 1.25, followed by sufficient mixing in an agate mortar, thereby obtaining a powder mixture. The obtained powder mixture was fired at a temperature of 1,400°C for 10 hours in an atmospheric atmosphere, thereby obtaining a Ba₅Nb₄O₁₅ powder. The powder was measured through powder XRD, and thus it was confirmed that the powder was formed of a single phase of Ba₅Nb₄O₁₅ crystals.

Powders of potassium niobate (KNbO₃, obtained from Kojundo Chemical Lab. Co., Ltd.), Ba₅Nb₄O₁₅, and niobium (Nb) were weighed such that the ratio of K/Ba/Nb (ratio by mole) would be 0.33/0.67/1.0, followed by sufficient mixing in an agate mortar, thereby obtaining a powder mixture. The obtained powder mixture was pressed into a pellet form, followed by firing in an argon atmosphere at a temperature of 1,400°C for 6 hours, thereby obtaining a powder of K_{0.33}Ba_{0.67}NbO₃, i.e., the Group 5 element complex oxide particles. The powder was measured through powder XRD, and thus it was confirmed that the powder was formed of a single phase of K_{0.33}Ba_{0.67}NbO₃ crystals.

### (Preparation of Group 5 element complex oxide particle dispersion liquid)

10% by mass of the above K_{0.33}Ba_{0.67}NbO₃ powder, 5% by mass of the dispersant a, and 85% by mass of methyl isobutyl ketone were weighed. These were charged into a paint shaker containing ZrO₂ beads 0.3 mm in diameter, and pulverized and dispersed for 15 hours, thereby obtaining the Group 5 element complex oxide particle dispersion liquid (hereinafter also referred to as a "K_{0.33}Ba_{0.67}NbO₃ particle dispersion liquid").

### (Preparation of infrared-absorbing particle dispersion liquid)

The Cs_{0.33}WO₃ particle dispersion liquid and the K_{0.33}Ba_{0.67}NbO₃ particle dispersion liquid were mixed such that the ratio by mass between the Cs_{0.33}WO₃ particles and the K_{0.33}Ba_{0.67}NbO₃ particles contained in the dispersion liquid would be 100:100, thereby obtaining the infrared-absorbing particle dispersion liquid. The Cs_{0.33}WO₃ particle dispersion liquid used was the Cs_{0.33}WO₃ particle dispersion liquid prepared in Example 1. The average particle size of the infrared-absorbing particles contained in the infrared-absorbing particle dispersion liquid was measured to be 29 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 10 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Example 11]

### (Preparation of Group 5 element complex oxide particles)

Powders of sodium carbonate (Na₂CO₃), strontium carbonate (SrCO₃), and divanadium pentoxide (V₂O₅) were weighed such that the ratio of Na/Sr/V (ratio by mole) would be 0.75/0.25/1.0, followed by sufficient mixing in an agate mortar, thereby obtaining a powder mixture. The obtained powder mixture was fired at a temperature of 1,400°C for 3 hours in a mixed atmosphere of 3% hydrogen/97% argon (ratio by mole), thereby obtaining an Na_{0.75}Sr_{0.25}VO₃ powder. The powder was measured through powder XRD, and thus it was confirmed that the powder was formed of a single phase of Na_{0.75}Sr_{0.25}VO₃ crystals.

### (Preparation of Group 5 element complex oxide particle dispersion liquid)

10% by mass of the above Na_{0.75}Sr_{0.25}VO₃ powder, 5% by mass of the dispersant a, and 85% by mass of methyl isobutyl ketone were weighed. These were charged into a paint shaker containing ZrO₂ beads 0.3 mm in diameter, and pulverized and dispersed for 15 hours, thereby obtaining the Group 5 element complex oxide particle dispersion liquid (hereinafter also referred to as an "Na_{0.75}Sr_{0.25}VO₃ particle dispersion liquid").

### (Preparation of infrared-absorbing particle dispersion liquid)

The Cs_{0.33}WO₃ particle dispersion liquid and the Na_{0.75}Sr_{0.25}VO₃ particle dispersion liquid were mixed such that the ratio by mass between the Cs_{0.33}WO₃ particles and the Na_{0.75}Sr_{0.25}VO₃ particles contained in the dispersion liquid would be 100:100, thereby obtaining the infrared-absorbing particle dispersion liquid. The Cs_{0.33}WO₃ particle dispersion liquid used was the Cs_{0.33}WO₃ particle dispersion liquid prepared in Example 1. The average particle size of the infrared-absorbing particles contained in the infrared-absorbing particle dispersion liquid was measured to be 33 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 11 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Example 12]

### (Preparation of Group 5 element complex oxide particles)

Powders of sodium carbonate (Na₂CO₃) and tantalum oxide (Ta₂O₅) were weighed such that the ratio of Na/Ta (ratio by mole) would be 1.0, followed by sufficient mixing in an agate mortar, thereby obtaining a powder mixture. The obtained powder mixture was fired at a temperature of 800°C for 48 hours in an atmospheric atmosphere. Subsequently, the powder mixture was fired for another 48 hours at a temperature of 1,200°C increased from 800°C, thereby obtaining an NaTaO₃ powder. The powder was measured through powder XRD, and thus it was confirmed that the powder was formed of a single phase of NaTaO₃ crystals.

Powders of strontium carbonate (SrCO₃) and tantalum oxide (Ta₂O₅) were weighed such that the ratio of Sr/Ta (ratio by mole) would be 1.25, followed by sufficient mixing in an agate mortar, thereby obtaining a powder mixture. The obtained powder mixture was fired at a temperature of 800°C for 48 hours in an atmospheric atmosphere. Subsequently, the powder mixture was fired for another 48 hours at an increased temperature of 1,200°C, thereby obtaining an Sr₅Ta₄O₁₅ powder. The powder was measured through powder XRD, and thus it was confirmed that the powder was formed of a single phase of Sr₅Ta₄O₁₅ crystals.

Powders of NaTaO_{3,} Sr₅Ta₄O₁₅, and tantalum (Ta) were weighed such that the ratio of Na/Sr/Ta (ratio by mole) would be 0.8/0.2/1.0, followed by sufficient mixing in an agate mortar, thereby obtaining a powder mixture. The obtained powder mixture was pressed into a pellet form, and then charged into a tantalum tube in an argon atmosphere. The charged sample was fired at a temperature of 1,400°C for 20 hours, thereby obtaining an Na_{0.8}Sr_{0.2}TaO₃ powder, i.e., the Group 5 element complex oxide particle. The powder was measured through powder XRD, and thus it was confirmed that the powder was formed of a single phase of Na_{0.8}Sr_{0.2}TaO₃ crystals.

### (Preparation of Group 5 element complex oxide particle dispersion liquid)

10% by mass of the above Na_{0.8}Sr_{0.2}TaO₃ powder, 5% by mass of the dispersant a, and 85% by mass of methyl isobutyl ketone were weighed. These were charged into a paint shaker containing ZrO₂ beads 0.3 mm in diameter, and pulverized and dispersed for 15 hours, thereby obtaining the Group 5 element complex oxide particle dispersion liquid (hereinafter also referred to as an "Na_{0.8}Sr_{0.2}TaO₃ particle dispersion liquid").

### (Preparation of infrared-absorbing particle dispersion liquid)

The Cs_{0.33}WO₃ particle dispersion liquid and the Na_{0.8}Sr_{0.2}TaO₃ particle dispersion liquid were mixed such that the ratio by mass between the Cs_{0.33}WO₃ particles and the Na_{0.8}Sr_{0.2}TaO₃ particles contained in the dispersion liquid would be 100:25, thereby obtaining the infrared-absorbing particle dispersion liquid. The Cs_{0.33}WO₃ particle dispersion liquid used was the Cs_{0.33}WO₃ particle dispersion liquid prepared in Example 1. The average particle size of the infrared-absorbing particles contained in the infrared-absorbing particle dispersion liquid was measured to be 30 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 12 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Example 13]

### (Preparation of complex tungsten oxide particles)

Powders of tungstic acid (H₂WO₄) and rubidium carbonate (Rb₂CO₃) were weighed such that the ratio of Rb/W (ratio by mole) would be 0.33, followed by sufficient mixing in an agate mortar, thereby obtaining a powder mixture. The obtained powder mixture was heated while being supplied with a gas containing 5% by volume of H₂ gas with N₂ gas as a carrier, subjected to a reducing treatment at a temperature of 600°C for 1 hour, and then fired at 800°C for 30 minutes in an N₂ gas atmosphere, thereby obtaining a powder of Rb_{0.33}WO₃, i.e., a complex tungsten oxide. The powder was measured through powder XRD, and thus it was confirmed that the powder was formed of a single phase of Rb_{0.33}WO₃ crystals.

### (Preparation of complex tungsten oxide particle dispersion liquid)

20% by mass of the above Rb_{0.33}WO₃ powder, 10% by mass of the dispersant a, and 70% by mass of methyl isobutyl ketone were weighed. These were charged into a paint shaker containing ZrO₂ beads 0.3 mm in diameter, and pulverized and dispersed for 10 hours, thereby obtaining the complex tungsten oxide particle dispersion liquid (hereinafter also referred to as an "Rb_{0.33}WO₃ particle dispersion liquid").

### (Preparation of infrared-absorbing particle dispersion liquid)

The Rb_{0.33}WO₃ particle dispersion liquid and the Na_{0.5}Sr_{0.5}NbO₃ particle dispersion liquid prepared in Example 6 were mixed such that the ratio by mass between the Rb_{0.33}WO₃ particles and the Na_{0.5}Sr_{0.5}NbO₃ particles contained in the dispersion liquid would be 100:150, thereby obtaining the infrared-absorbing particle dispersion liquid. The average particle size of the infrared-absorbing particles contained in the infrared-absorbing particle dispersion liquid was measured to be 23 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 13 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Example 14]

### (Preparation of complex tungsten oxide particles)

Powders of tungstic acid (H₂WO₄) and potassium carbonate (K₂CO₃) were weighed such that the ratio of K/W (ratio by mole) would be 0.33, followed by sufficient mixing in an agate mortar, thereby obtaining a powder mixture. The obtained powder mixture was heated while being supplied with a gas containing 5% by volume of H₂ gas with N₂ gas as a carrier, subjected to a reducing treatment at a temperature of 550°C for 1.5 hours, and then fired at 800°C for 30 minutes in an N₂ gas atmosphere, thereby obtaining a powder of K_{0.33}WO₃, i.e., a complex tungsten oxide. The powder was measured through powder XRD, and thus it was confirmed that the powder was formed of a single phase of K_{0.33}WO₃ crystals.

### (Preparation of complex tungsten oxide particle dispersion liquid)

20% by mass of the K_{0.33}WO₃ powder, 10% by mass of the dispersant a, and 70% by mass of methyl isobutyl ketone were weighed. These were charged into a paint shaker containing ZrO₂ beads 0.3 mm in diameter, and pulverized and dispersed for 10 hours, thereby obtaining the complex tungsten oxide particle dispersion liquid (hereinafter also referred to as a "K_{0.33}WO₃ particle dispersion liquid").

### (Preparation of infrared-absorbing particle dispersion liquid)

The K_{0.33}WO₃ particle dispersion liquid and the Na_{0.5}Sr_{0.5}NbO₃ particle dispersion liquid prepared in Example 6 were mixed such that the ratio by mass between the K_{0.33}WO₃ particles and the Na_{0.5}Sr_{0.5}NbO₃ particles contained in the dispersion liquid would be 100:100, thereby obtaining the infrared-absorbing particle dispersion liquid. The average particle size of the infrared-absorbing particles contained in the infrared-absorbing particle dispersion liquid was measured to be 19 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Example 14 were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Comparative Example 1]

The Cs_{0.33}WO₃ particle dispersion liquid prepared in Example 1 was used as the infrared-absorbing particle dispersion liquid, and was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Comparative Example 1 were produced in accordance with the same procedure as in Example 1 under the same conditions as in Example 1, except that the above infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Comparative Example 2]

The Na_{0.75}Sr_{0.25}NbO₃ particle dispersion liquid prepared in Example 1 was used as the infrared-absorbing particle dispersion liquid, and was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Comparative Example 2 were produced in accordance with the same procedure as in Example 1 under the same conditions as in Example 1, except that the above infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Comparative Example 3]

The Na_{0.5}Sr_{0.5}NbO₃ particle dispersion liquid prepared in Example 6 was used as the infrared-absorbing particle dispersion liquid, and was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing particle dispersion according to Comparative Example 3 were produced in accordance with the same procedure as in Example 1 under the same conditions as in Example 1, except that the above infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Comparative Example 4]

For the Cs_{0.33}WO₃ particle dispersion liquid prepared in Example 1, the solar radiation transmittance, the transmittance at a wavelength of 850 nm, and the b^{*} value were measured from a transmittance profile, which was obtained when the spectral transmittance was measured by adjusting the dilution rate such that the visible light transmittance would be 85.0%. The measurement results are shown in Table 1.

### (Production of infrared-absorbing transparent substrate and infrared-absorbing particle dispersion)

A coating liquid was prepared under the same conditions as in Example 1, except that the Cs_{0.33}WO₃ particle dispersion liquid prepared in Example 1 was used as the infrared-absorbing particle dispersion liquid. An infrared-absorbing transparent substrate was obtained by adjusting the coating thickness of the prepared coating liquid at the time of bar coating such that the visible light transmittance would be 75.8%.

Also, the dispersion powder was added to a polycarbonate resin, i.e., a thermoplastic resin, such that the visible light transmittance of an infrared-absorbing sheet (2.0 mm thick) to be produced would be 76.5%. Except for the above, an infrared-absorbing sheet producing composition was prepared in accordance with the same procedure as in Example 1 under the same conditions as in Example 1. An infrared-absorbing sheet, i.e., the infrared-absorbing particle dispersion, was obtained in accordance with the same procedure as in Example 1 under the same conditions as in Example 1, except that the prepared composition was used.

The obtained infrared-absorbing transparent substrate and infrared-absorbing particle dispersion were evaluated in accordance with the same procedure as in Example 1. The evaluation results are shown in Tables 2 and 3.

### [Comparative Example 5]

For the Cs_{0.33}WO₃ particle dispersion liquid prepared in Example 1, the solar radiation transmittance, the transmittance at a wavelength of 850 nm, and the b^{*} value were measured from a transmittance profile, which was obtained when the spectral transmittance was measured by adjusting the dilution rate such that the visible light transmittance would be 90.0%. The measurement results are shown in Table 1.

### (Production of infrared-absorbing transparent substrate and infrared-absorbing particle dispersion)

A coating liquid was prepared under the same conditions as in Example 1, except that the Cs_{0.33}WO₃ particle dispersion liquid prepared in Example 1 was used as the infrared-absorbing particle dispersion liquid. An infrared-absorbing transparent substrate was obtained by adjusting the coating thickness of the prepared coating liquid at the time of bar coating such that the visible light transmittance would be 80.3%.

Also, the dispersion powder was added to a polycarbonate resin, i.e., a thermoplastic resin, such that the visible light transmittance of an infrared-absorbing sheet (2.0 mm thick) to be produced would be 81.0%. Except for the above, an infrared-absorbing sheet producing composition was prepared in accordance with the same procedure as in Example 1 under the same conditions as in Example 1. An infrared-absorbing sheet, i.e., an infrared-absorbing particle dispersion, was obtained in accordance with the same procedure as in Example 1 under the same conditions as in Example 1, except that the prepared composition was used.

The obtained infrared-absorbing transparent substrate and infrared-absorbing particle dispersion were evaluated in accordance with the same procedure as in Example 1. The evaluation results are shown in Tables 2 and 3.

### [Reference Example 1]

54.9 g of SnCl₄·5H₂O (obtained from Wako Pure Chemical Industries, Ltd., Wako special grade, purity: 98% or higher) was dissolved in 340 g of water of 25°C, thereby obtaining a tin compound solution. 12.7 mL of a methanol solution (obtained from YONEYAMA YAKUHIN KOGYO CO., LTD., Reagent special grade, purity: 99.8% or higher) containing 4.2 g of SbCl₃ (obtained from Wako Pure Chemical Industries, Ltd., JIS special grade, purity: 98% or higher), i.e., an antimony compound, and an aqueous NH₄OH solution (obtained from Wako Pure Chemical Industries, Ltd., Reagent special grade, concentration: 30%), i.e., an alkaline solution, diluted to a concentration of 16% were dropped in parallel to the obtained tin compound solution. By this parallel dropping, a hydroxide containing tin and antimony as a precursor of antimony-doped tin oxide (hereinafter referred to as ATO) infrared-absorbing particles was produced and precipitated.

From the viewpoint of desired optical characteristics, the amount of the antimony compound added to the tin compound solution was 9.5 parts by mass in terms of an antimony element relative to 100 parts by mass of a tin(IV) oxide. By adding the antimony compound in the above amount, it is possible to produce ATO infrared-absorbing particles containing an Sn element in an amount of about 68% by mass and an Sb element in an amount of about 8% by mass.

As described above, aqueous ammonia was used as an alkali solution used as a precipitant, and the alkali concentration was set to 16%, which was 1.6 times the chemical equivalent necessary for the tin compound and the antimony compound to be a hydroxide.

The period for parallel dropping of the methanol solution and the alkali solution was 25 minutes, and the parallel dropping was performed until the pH of the solution obtained through dropping was 7.5. After completion of the dropping, the stirring of the solution was continued for 10 minutes to achieve uniformity in the system. The temperature of the solution at that time was set to 65°C, which was the same temperature as that at the time of the parallel dropping.

Next, the precipitate was repeatedly subjected to decantation for washing. The precipitate was sufficiently washed until the conductivity of the supernatant of the washed liquid in the decantation was 1 mS/cm or less, followed by filtration.

Next, the washed precipitate was subjected to a wetting treatment using an anhydrous ethyl alcohol solution (obtained from Wako Pure Chemical Industries, Ltd., Reagent special grade, purity: 99.5% or higher). At the time of the wetting treatment, the ratio by mass of [the filtrated precipitate:the anhydrous ethyl alcohol solution] was set to a ratio of 1:4 (the percentage of the alcohol: 80%). The filtrated precipitate and the anhydrous ethyl alcohol solution were stirred at room temperature for 1 hour as the wetting treatment, thereby obtaining a precursor. After completion of the wetting treatment, the precursor was dried at 90°C for 10 hours, thereby obtaining a dry product.

The ATO (antimony tin oxide) particle precursor, which had undergone the wetting treatment, was heated to 700°C in an atmospheric atmosphere, followed by firing for 2 hours, thereby producing ATO particles according to Reference Example 1.

20% by mass of the ATO particle powder, 10% by mass of the dispersant a, and 70% by mass of methyl isobutyl ketone were weighed. These were charged into a paint shaker containing ZrO₂ beads 0.3 mm in diameter, and pulverized and dispersed for 10 hours, thereby obtaining the ATO particle dispersion liquid. Then, in the same manner as in Example 1, the solar radiation transmittance, the transmittance at a wavelength of 850 nm, and the b^{*} value were measured from a transmittance profile, which was obtained when the spectral transmittance was measured by adjusting the dilution rate such that the visible light transmittance would be 80.0%. The measurement results are shown in Table 1.

An infrared-absorbing transparent substrate and an infrared-absorbing sheet, i.e., an infrared-absorbing particle dispersion, were obtained in accordance with the same procedure as in Example 1 under the same conditions as in Example 1, except that the ATO particle dispersion liquid was used.

The obtained infrared-absorbing transparent substrate and infrared-absorbing particle dispersion were evaluated in accordance with the same procedure as in Example 1. The evaluation results are shown in Tables 2 and 3.

### [Comparative Example 6]

### (Preparation of iron oxide particle dispersion liquid)

10% by mass of a pigment powder (TM Red 8270, obtained from Dainichiseika Color & Chemicals Mfg. Co., Ltd.) of iron oxide (Fe₂O₃), 5% by mass of the dispersant a, and 85% by mass of methyl isobutyl ketone were weighed. These were charged into a paint shaker containing ZrO₂ beads 0.3 mm in diameter, and pulverized and dispersed for 6 hours, thereby obtaining an iron oxide particle dispersion liquid.

### (Preparation of infrared-absorbing particle dispersion liquid)

The Cs_{0.33}WO₃ particle dispersion liquid prepared in Example 1 and the iron oxide particle dispersion liquid were mixed such that the ratio by mass between the Cs_{0.33}WO₃ particles and the iron oxide particles contained in the infrared-absorbing particle dispersion liquid would be 100:15, thereby obtaining the infrared-absorbing particle dispersion liquid. The average particle size of the infrared-absorbing particles contained in the infrared-absorbing particle dispersion liquid was measured to be 36 nm.

The infrared-absorbing particle dispersion liquid was evaluated in accordance with the same procedure as in Example 1 under the same conditions as in Example 1. The evaluation results are shown in Table 1.

### (Production of infrared-absorbing transparent substrate and infrared-absorbing particle dispersion)

An infrared-absorbing transparent substrate and an infrared-absorbing sheet, i.e., the infrared-absorbing particle dispersion, were produced in accordance with the same procedure as in Example 1 under the same conditions as in Example 1, except that the above prepared infrared-absorbing particle dispersion liquid was used.

The obtained infrared-absorbing transparent substrate and infrared-absorbing particle dispersion were evaluated in accordance with the same procedure as in Example 1. The evaluation results are shown in Tables 2 and 3.

**[Table 1-1]**

| | Infrared-absorbing particles | | | Infrared-absorbing particles dispersion liquid | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 1 | | Na_{0.75}Sr_{0.25}NbO₃ | 100:50 | 80.0 | 42.0 | ⊚ | 17.8 | ○ | -0.9 | ○ |
| Ex. 2 | | | 100:100 | 80.0 | 43.7 | ⊚ | 22.3 | O | 0.3 | ⊚ |
| Ex. 3 | | | 100:200 | 80.0 | 46.2 | ○ | 29.3 | O | 1.6 | ⊚ |
| Ex. 4 | | | 100:300 | 80.0 | 48.0 | ○ | 34.4 | ⊚ | 2.4 | ⊚ |
| Ex. 5 | | | 100:50 | 85.0 | 49.9 | ○ | 28.5 | ○ | -0.6 | ○ |
| Ex. 6 | Cs_{0.33}WO₃ | Na_{0.5}Sr_{0.5}NbO₃ | 100:50 | 80.0 | 41.8 | ⊚ | 17.5 | ○ | -1.5 | ○ |
| Ex. 7 | | | 100:100 | 80.0 | 43.2 | ⊚ | 21.4 | ○ | -0.7 | ○ |
| Ex. 8 | | | 100:200 | 80.0 | 45.1 | ○ | 27.2 | ○ | 0.1 | ⊚ |
| Ex. 9 | | | 100:300 | 80.0 | 46.3 | ○ | 31.1 | ⊚ | 0.6 | ⊚ |
| Ex. 10 | | K_{0.33}Ba_{0.67}NbO₃ | 100:100 | 80.0 | 45.5 | ○ | 22.0 | ○ | -0.3 | ○ |
| Ex. 11 | | Na_{0.75}Sr₀.₂₅VO₃ | 100:100 | 80.0 | 45.4 | ○ | 25.5 | ○ | 1.9 | ⊚ |
| Ex. 12 | | Na_{0.8}Sr_{0.2}TaO₃ | 100:25 | 80.0 | 48.3 | ○ | 19.4 | ○ | -0.5 | ○ |

| | Infrared-absorbing particles | | | Infrared-absorbing particles dispersion liquid | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 13 | Rb_{0.33}WO₃ | Na_{0.5}Sr_{0.5}NbO₃ | 100:150 | 80.0 | 45.3 | ○ | 25.7 | ○ | 0.8 | ⊚ |
| Ex. 14 | K_{0.33}WO₃ | Na_{0.5}Sr_{0.5}NbO₃ | 100:100 | 80.0 | 49.7 | ○ | 29.5 | ○ | 1.3 | ⊚ |
| Comp. Ex. 1 | Cs_{0.33}WO₃ | None | - | 80.0 | 39.8 | ⊚ | 11.7 | × | -2.5 | × |
| Comp. Ex. 2 | None | Na_{0.75}Sr_{0.25}NbO₃ | - | 80.0 | 57.3 | × | 63.7 | ⊚ | 5.5 | ⊚ |
| Comp. Ex. 3 | None | Na_{0.5}Sr_{0.5}NbO₃ | - | 80.0 | 51.8 | × | 50.2 | ⊚ | 2.3 | ⊚ |
| Comp. Ex. 4 | CS_{0.33}WO₃ | None | - | 85.0 | 47.4 | ○ | 22.1 | ○ | -2.0 | × |
| Comp. Ex. 5 | | | - | 90.0 | 58.2 | × | 37.6 | ⊚ | -1.3 | ○ |
| Ref. Ex. 1 | (antimony tin oxide) | None | - | 80.0 | 59.4 | × | 63.7 | ⊚ | -0.4 | ○ |
| Comp. Ex. 6 | Cs_{0.33}WO₃ | (iron oxide) | 100:15 | 80.0 | 51.1 | × | 29.8 | ○ | 0.2 | ⊚ |

**[Table 2-1]**

| | Infrared-absorbing particles | | | Infrared-absorbing transparent substrate | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 1 | | Na_{0.75}Sr_{0.25}NbO₃ | 100:50 | 71.4 | 37.4 | ⊚ | 16.0 | ○ | -0.1 | ○ |
| Ex. 2 | | | 100:100 | 71.4 | 38.9 | ⊚ | 20.0 | ○ | 0.9 | ⊚ |
| Ex. 3 | | | 100:200 | 71.4 | 41.2 | ○ | 26.4 | ○ | 2.3 | ⊚ |
| Ex. 4 | | | 100:300 | 71.4 | 42.8 | ○ | 31.0 | ⊚ | 3.0 | ⊚ |
| Ex. 5 | | | 100:50 | 75.8 | 44.4 | ○ | 25.6 | ○ | 0.1 | ○ |
| Ex. 6 | CS_{0.33}WO₃ | Na_{0.5}Sr_{0.5}NbO₃ | 100:50 | 71.4 | 37.2 | ⊚ | 15.7 | ○ | -0.7 | ○ |
| Ex. 7 | | | 100:100 | 71.4 | 38.4 | ⊚ | 19.3 | ○ | 0.0 | ○ |
| Ex. 8 | | | 100:200 | 71.4 | 40.1 | ○ | 24.4 | ○ | 0.8 | ⊚ |
| Ex. 9 | | | 100:300 | 71.4 | 41.2 | ○ | 28.0 | ○ | 1.2 | ⊚ |
| Ex. 10 | | K_{0.33}Ba_{0.67}NbO₃ | 100:100 | 71.4 | 40.5 | ○ | 19.8 | ○ | 0.4 | ○ |
| Ex. 11 | | Na_{0.75}Sr_{0.25}VO₃ | 100:100 | 71.4 | 40.4 | ○ | 23.0 | ○ | 2.6 | ⊚ |
| Ex. 12 | | Na_{0.8}Sr_{0.2}TaO₃ | 100:25 | 71.4 | 43.0 | ○ | 17.5 | ○ | 0.2 | ○ |

| | Infrared-absorbing particles | | | Infrared-absorbing transparent substrate | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 13 | Rb_{0.33}WO₃ | Na_{0.5}Sr_{0.5}NbO₃ | 100:150 | 71.4 | 40.3 | ○ | 23.1 | ○ | 1.5 | ⊚ |
| Ex. 14 | K_{0.33}WO₃ | Na_{0.5}Sr_{0.5}NbO₃ | 100:100 | 71.4 | 44.2 | ○ | 26.6 | ○ | 2.0 | ⊚ |
| Comp. Ex. 1 | Cs_{0.33}WO₃ | None | - | 71.4 | 35.5 | ⊚ | 11.2 | × | -1.8 | × |
| Comp. Ex. 2 | None | Na_{0.75}Sr_{0.25}NbO₃ | - | 71.4 | 51.1 | × | 57.3 | ⊚ | 6.0 | ⊚ |
| Comp. Ex. 3 | None | Na_{0.5}Sr_{0.5}NbO₃ | - | 71.4 | 46.1 | × | 45.2 | ⊚ | 2.9 | ⊚ |
| Comp. Ex. 4 | Cs_{0.33}WO₃ | None | - | 75.8 | 42.2 | ○ | 19.9 | ○ | -1.3 | × |
| Comp. Ex. 5 | | | - | 80.3 | 51.8 | × | 33.8 | ⊚ | -0.6 | ○ |
| Ref. Ex. 1 | (antimony tin oxide) | None | - | 71.4 | 52.9 | × | 57.3 | ⊚ | 0.3 | ○ |
| Comp. Ex. 6 | Cs_{0.33}WO₃ | (iron oxide) | 100:15 | 71.4 | 45.5 | × | 26.8 | ○ | 0.9 | ⊚ |

**[Table 3-1]**

| | Infrared-absorbing particles | | | Infrared-absorbing particle dispersion | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 1 | | Na_{0.75}Sr_{0.25}NbO₃ | 100:50 | 72.0 | 37.5 | ⊚ | 16.0 | ○ | -0.3 | ○ |
| Ex. 2 | | | 100:100 | 72.0 | 39.0 | ⊚ | 20.1 | ○ | 0.8 | ⊚ |
| Ex. 3 | | | 100:200 | 72.0 | 41.3 | ○ | 26.4 | ○ | 2.2 | ⊚ |
| Ex. 4 | | | 100:300 | 72.0 | 42.9 | ○ | 31.0 | ⊚ | 2.9 | ⊚ |
| Ex. 5 | | | 100:50 | 76.5 | 44.3 | ○ | 25.6 | ○ | 0.0 | ○ |
| Ex. 6 | Cs_{0.33}WO₃ | Na_{0.5}Sr_{0.5}NbO₃ | 100:50 | 72.0 | 37.3 | ⊚ | 15.7 | ○ | -0.8 | ○ |
| Ex. 7 | | | 100:100 | 72.0 | 38.5 | ⊚ | 19.3 | ○ | -0.1 | ○ |
| Ex. 8 | | | 100:200 | 72.0 | 40.2 | ○ | 24.5 | ○ | 0.7 | ⊚ |
| Ex. 9 | | | 100:300 | 72.0 | 41.3 | ○ | 28.0 | ○ | 1.1 | ⊚ |
| Ex. 10 | | K_{0.33}Ba_{0.67}NbO₃ | 100:100 | 72.0 | 40.5 | ○ | 19.8 | ○ | 0.3 | ○ |
| Ex. 11 | | Na_{0.75}Sr_{0.25}VO₃ | 100:100 | 72.0 | 40.4 | ○ | 23.0 | ○ | 2.4 | ⊚ |
| Ex. 12 | | Na_{0.8}Sr_{0.2}TaO₃ | 100:25 | 72.0 | 43.0 | ○ | 17.5 | ○ | 0.1 | ○ |

| | Infrared-absorbing particles | | | Infrared-absorbing particle dispersion | | | | | | |
|---|---|---|---|---|---|---|---|---|---|---|
| | Complex tungsten oxide | Group 5 element complex oxide | Ratio by mass (Complex tungsten oxide particles:Group 5 element complex oxide particles) | VLT | ST | | 850nm transmittance | | b* | |
| | | | | (%) | (%) | Evaluation | (%) | Evaluation | (-) | Evaluation |
| Ex. 13 | Rb_{0.33}WO₃ | Na_{0.5}Sr_{0.5}NbO₃ | 100:150 | 72.0 | 40.3 | ○ | 23.1 | ○ | 1.4 | ⊚ |
| Ex. 14 | K_{0.33}WO₃ | Na_{0.5}Sr_{0.5}NbO₃ | 100:100 | 72.0 | 44.2 | ○ | 26.6 | ○ | 1.9 | ⊚ |
| Comp. Ex. 1 | CS_{0.33}WO₃ | None | - | 72.0 | 35.6 | ⊚ | 10.5 | × | -1.9 | × |
| Comp. Ex. 2 | None | Na_{0.75}Sr_{0.25}NbO₃ | - | 72.0 | 51.2 | × | 57.4 | ⊚ | 5.9 | ⊚ |
| Comp**.** Ex. 3 | None | Na_{0.5}Sr_{0.5}NbO₃ | - | 72.0 | 45.1 | × | 46.3 | ⊚ | 2.8 | ⊚ |
| Comp. Ex. 4 | Cs_{0.33}WO₃ | None | - | 76.5 | 42.2 | ○ | 19.9 | ○ | -1.4 | × |
| Comp. Ex. 5 | | | - | 81.0 | 51.8 | × | 33.8 | ⊚ | -0.7 | ○ |
| Ref. Ex. 1 | (antimony tin oxide) | None | - | 72.0 | 53.1 | × | 57.4 | ⊚ | 0.2 | ○ |
| Comp. Ex. 6 | Cs_{0.33}WO₃ | (iron oxide) | 100:15 | 80.0 | 45.5 | × | 27.1 | ○ | 0.9 | ⊚ |

### (3) Evaluation results

Compared to Comparative Example 1, i.e., the conventional complex tungsten oxide particle dispersion liquid, the transmittance with respect to near-infrared light having a wavelength of 850 nm was high, i.e., 15% or higher, with the visible light transmittance being 80%, in the infrared-absorbing particle dispersion liquids according to Examples 1 to 14. As a result, it was confirmed that a high transmittance with respect to light in the near-infrared light region having a wavelength of 700 nm or more and 1,000 nm or less could be obtained, while ensuring a high heat shielding property, i.e., a solar radiation transmittance of less than 50%. Further, compared to Comparative Example 1, i.e., the conventional complex tungsten oxide particle dispersion liquid, the b* value was more than -2.0, indicating a suppressed blue color tone, in the infrared-absorbing particle dispersion liquids of Examples 1 to 14.

In the dispersion liquids of Comparative Examples 2 and 3, which did not contain the complex tungsten oxide and used the Group 5 element complex oxide particles alone, the solar radiation transmittance was 50% or more with the visible light transmittance being 80%, indicating that a sufficient heat shielding property was not ensured.

In Comparative Example 4, a conventional complex tungsten oxide particle dispersion liquid was used at a low concentration (i.e., a high VLT region) compared to that in Comparative Example 1. As a result, although the high transmittance with respect to light in the near-infrared light region having a wavelength of 700 nm or more and 1,000 nm or less was obtained, a blue color tone was not sufficiently reduced.

In Comparative Example 5, a conventional complex tungsten oxide fine particle dispersion liquid was used at a lower concentration (i.e., a higher VLT region) compared to that in Comparative Example 4. As a result, although the high transmittance with respect to light in the near-infrared light region having a wavelength of 700 nm or more and 1,000 nm or less was obtained, and the blueness was sufficiently reduced, the solar radiation transmittance increased due to a significant reduction in the amount of the infrared-absorbing particles, i.e., a sufficient heat shielding property was not ensured.

Comparative Example 6 produced a dispersion liquid in which iron oxide particles having a color tone adjusting ability were used in combination with conventional complex tungsten oxide particles. As a result, although the blueness of the color tone was reduced, the solar radiation transmittance was 50% or higher with the visible light transmittance being 80%, i.e., a sufficient heat shielding property was not ensured.

It was confirmed that the infrared-absorbing transparent substrate and the infrared-absorbing particle dispersion produced in each Experimental Example also exhibited the same tendency as that in the corresponding infrared-absorbing particle dispersion liquid.

This application claims priority to Japanese Patent Application No. 2023-153868, filed with the Japan Patent Office on September 20, 2023, and the entire contents of Japanese Patent Application No. 2023-153868 are incorporated in the present international application.

### REFERENCE SIGNS LIST

- 10: Unit cell
- 11: Octahedron
- 12: Void (tunnel)
- 13: Element M
- 20: Infrared-absorbing particle dispersion liquid
- 21: Liquid medium
- 22: Infrared-absorbing particles
- 221: Complex tungsten oxide particles
- 222: Group 5 element complex oxide particles
- 30: Infrared-absorbing transparent substrate
- 31: Transparent substrate
- 31A: One surface
- 32: Coating layer
- 40: Infrared-absorbing particle dispersion
- 41: Solid medium
- 42: Infrared-absorbing particles
- 421: Complex tungsten oxide particles
- 422: Group 5 element complex oxide particles
- 50: Infrared-absorbing laminated transparent substrate
- 51: Infrared-absorbing particle dispersion
- 521: Transparent substrate
- 522: Transparent substrate

## Claims

1. Infrared-absorbing particles, comprising:
complex tungsten oxide particles; and
Group 5 element complex oxide particles.

2. The infrared-absorbing particles according to claim 1, wherein
the Group 5 element complex oxide particles include a complex oxide that includes
an element A1 that is one or more elements selected from H and alkali metal elements,
an element A2 that is one or more elements selected from Mg and alkaline earth metal elements, and
an element B that is one or more elements selected from V, Nb, and Ta, and
the complex oxide satisfies relationships of 0.002≤(x1+x2)/y≤1.5, 0.001≤x1/y≤1, and 0.001≤x2/y≤1, where x1 denotes an amount by mole of the included element A1, x2 denotes an amount by mole of the included element A2, and y denotes an amount by mole of the included element B.

3. The infrared-absorbing particles according to claim 2, wherein
where z denotes an amount by mole of oxygen included in the complex oxide, the x1, the x2, the y, and the z satisfy a relationship of
0<(x1+2x2+5y-2z)/y≤3.

4. The infrared-absorbing particles according to claim 2, wherein
the element A1 is one or more elements selected from H, Li, Na, K, Rb, and Cs.

5. The infrared-absorbing particles according to claim 2, wherein
the element A2 is one or more elements selected from Ca, Sr, and Ba.

6. The infrared-absorbing particles according to claim 2, wherein
the element A1 is one or more elements selected from Na and K,
the element A2 is one or more elements selected from Ca, Sr, and Ba, the element B is one or more elements selected from Nb and Ta, and the x1, the x2, and the y satisfy a relationship of 0.7≤(x1+x2)/y≤1.0.

7. The infrared-absorbing particles according to any one of claims 1 to 6, wherein
an average particle size of one or more particles selected from the complex tungsten oxide particles and the Group 5 element complex oxide particles is 0.1 nm or more and 100 nm or less.

8. The infrared-absorbing particles according to any one of claims 1 to 6, wherein
the infrared-absorbing particles include the Group 5 element complex oxide particles in an amount of 20 parts by mass or more and 500 parts by mass or less relative to 100 parts by mass of the complex tungsten oxide particles included in the infrared-absorbing particles.

9. An infrared-absorbing particle dispersion liquid, comprising:
a liquid medium; and
the infrared-absorbing particles of any one of claims 1 to 6 disposed in the liquid medium.

10. An infrared-absorbing transparent substrate, comprising:
a transparent substrate; and
a coating layer disposed over at least one surface of the transparent substrate, wherein
the transparent substrate is a resin substrate or a glass substrate, and
the coating layer is a layer of a binder resin including the infrared-absorbing particles of any one of claims 1 to 6.

11. An infrared-absorbing particle dispersion, comprising:
a solid medium; and
the infrared-absorbing particles of any one of claims 1 to 6 disposed in the solid medium.

12. An infrared-absorbing laminated transparent substrate, comprising:
a plurality of transparent substrates; and
the infrared-absorbing particle dispersion of claim 11, wherein
the infrared-absorbing particle dispersion is disposed between the plurality of transparent substrates.
